# EUROPEAN PATENT APPLICATION

(11) **EP 4 443 995 A1**
(43) Date of publication of application: **09.10.2024**
(21) Application number: 22914858.0
(22) Date of filing: 28.12.2022
(51) Int. Cl.: H04W 64/00

(54) **COMMUNICATION METHOD AND RELATED APPARATUS**

(30) Priority: 31.12.2021 CN 202111676043
(71) Applicant: Huawei Technologies Co., Ltd., Shenzhen, Guangdong 518129 (CN)
(72) Inventor: HAO, Jinping, Shenzhen, Guangdong 518129 (CN)
(74) Representative: Pfenning, Meinig & Partner mbB
(86) International application number: PCT/CN2022/142617
(87) International publication number: WO 2023/125606

(57) **Abstract**

Embodiments of this application disclose a communication method and apparatus, to ensure normal implementation of a positioning function, so that a location management device positions a terminal device. The method includes: A distributed unit DU receives a positioning information request from a central unit CU, where the positioning information request is used to request to configure the terminal device to send a sounding reference signal SRS and request configuration information of the SRS. The DU sends a user equipment UE context modification required to the CU, where the UE context modification required includes first information, and the first information is used to indicate that the UE context modification required is in response to the positioning information request. The DU receives a UE context modification confirm from the CU. The DU sends a positioning information response to the CU, where the positioning information response includes the configuration information of the SRS. The first information includes a CU trigger, a CU requirement, a CU association, a positioning trigger, a positioning information trigger, a positioning information request trigger, or a CU positioning information request. The first information may be indication information.

## Description

This application claims priority to Chinese Patent Application No. 202111676043.8, filed with the China National Intellectual Property Administration on December 31, 2021 and entitled "COMMUNICATION METHOD AND RELATED APPARATUS", which is incorporated herein by reference in its entirety.

### TECHNICAL FIELD

This application relates to communication technologies, and in particular, to a communication method and a related apparatus.

### BACKGROUND

A positioning function is an important function of 5G new radio (new radio, NR). An access network device may use a structure including a central unit (central unit, CU) and a distributed unit (distributed unit, DU).

How to ensure normal implementation of a positioning function between the CU and the DU is a problem to be considered.

### SUMMARY

This application provides a communication method and a communication apparatus, to ensure normal implementation of a positioning function.

A first aspect of this application provides a communication method, including:
A DU receives a first positioning information request from a CU, where the first positioning information request is used to request to configure a terminal device to send an SRS and request configuration information of the SRS. The DU sends a UE context modification required to the CU, where the UE context modification required includes first information, and the first information is used to indicate that the UE context modification required is in response to the first positioning information request. The DU receives a UE context modification confirm from the CU. The DU sends a first positioning information response to the CU, where the first positioning information response includes the configuration information of the SRS.

In the foregoing technical solution, the DU sends the UE context modification required to the CU, and the UE context modification required includes the first information. The first information is used to indicate that the UE context modification required is in response to the first positioning information request. Therefore, the CU determines that the UE context modification required is initiated for the first positioning information request. The CU may process the UE context modification required, and send the UE context modification confirm to the DU. In this way, the DU configures the terminal device to send the SRS. After the DU receives the UE context modification confirm, the DU may send the first positioning information response to the CU, and the first positioning information response includes the configuration information of the SRS. Therefore, the CU feeds back the configuration information of the SRS to a location management device, so as to ensure normal implementation of a positioning function, so that the location management device positions the terminal device.

A second aspect of this application provides a communication method, including:
A DU receives a first positioning information request from a CU, where the first positioning information request is used to request to configure a terminal device to send an SRS and request configuration information of the SRS. The DU sends a UE context modification required to the CU, where the UE context modification required includes first information, and the first information is used to indicate that the UE context modification required is triggered by the CU. The DU receives a UE context modification confirm from the CU. The DU sends a first positioning information response to the CU, where the first positioning information response includes the configuration information of the SRS.

In the foregoing technical solution, the DU sends the UE context modification required to the CU, and the UE context modification required includes the first information. The first information is used to indicate that the UE context modification required is triggered by the CU. Therefore, the CU determines that the UE context modification required is initiated by the CU based on the first positioning information request. The CU may process the UE context modification required, and send the UE context modification confirm to the DU. In this way, the DU configures the terminal device to send the SRS. After the DU receives the UE context modification confirm, the DU may send the first positioning information response to the CU, and the first positioning information response includes the configuration information of the SRS. Therefore, the CU feeds back the configuration information of the SRS to a location management device, so as to ensure normal implementation of a positioning function, so that the location management device positions the terminal device.

A third aspect of this application provides a communication method, including:
A DU receives a first positioning information request from a CU, where the first positioning information request is used to request to configure a terminal device to send an SRS and request configuration information of the SRS. The DU sends a UE context modification required to the CU, where the UE context modification required includes first information, and the first information is used to indicate that the UE context modification required is associated with the first positioning information request. The DU receives a UE context modification confirm from the CU. The DU sends a first positioning information response to the CU, where the first positioning information response includes the configuration information of the SRS.

In the foregoing technical solution, the DU sends the UE context modification required to the CU, and the UE context modification required includes the first information. The first information is used to indicate that the UE context modification required is associated with the first positioning information request. Therefore, the CU determines that the UE context modification required is initiated for the first positioning information request. The CU may process the UE context modification required, and send the UE context modification confirm to the DU. In this way, the DU configures the terminal device to send the SRS. After the DU receives the UE context modification confirm, the DU may send the first positioning information response to the CU, and the first positioning information response includes the configuration information of the SRS. Therefore, the CU feeds back the configuration information of the SRS to a location management device, so as to ensure normal implementation of a positioning function, so that the location management device positions the terminal device.

A fourth aspect of this application provides a communication method, including:
A DU receives a first positioning information request from a CU, where the first positioning information request is used to request to configure a terminal device to send an SRS and request configuration information of the SRS. The DU sends a UE context modification required to the CU, where the UE context modification required includes first information, and the first information is used to indicate that the UE context modification required is in response to the first positioning information request. The DU receives a UE context modification refuse from the CU. The DU sends a first positioning information failure to the CU, where the first positioning information failure is used to indicate that SRS configuration fails.

In the foregoing technical solution, the DU sends the UE context modification required to the CU, and the UE context modification required includes the first information. The first information is used to indicate that the UE context modification required is in response to the first positioning information request. In this case, the CU determines that the UE context modification required is initiated for the first positioning information request. The CU may process the UE context modification required. If the CU fails to process the UE context modification required, the CU may send the UE context modification refuse to the DU. After the DU receives the UE context modification refuse, the DU may send the first positioning information failure to the CU. Therefore, the CU notifies a location management device that the SRS configuration fails. This helps the location management device re-initiate a process of configuring the SRS for the terminal device, to ensure smooth implementation of a positioning function, so that the location management device positions the terminal device. Therefore, this avoids a positioning failure caused by a failure to configure the configuration information of the SRS for the terminal device. In addition, this avoids a waste of measurement resources because the location management device requests a base station to measure the SRS of the terminal device when the location management device considers that SRS configuration for the terminal device succeeds.

A fifth aspect of this application provides a communication method, including:
A DU receives a first positioning information request from a CU, where the first positioning information request is used to request to configure a terminal device to send an SRS and request configuration information of the SRS. The DU sends a UE context modification required to the CU, where the UE context modification required includes first information, and the first information is used to indicate that the UE context modification required is triggered by the CU. The DU receives a UE context modification refuse from the CU. The DU sends a first positioning information failure to the CU, where the first positioning information failure is used to indicate that SRS configuration fails.

In the foregoing technical solution, the DU sends the UE context modification required to the CU, and the UE context modification required includes the first information. The first information is used to indicate that the UE context modification required is triggered by the CU. In this case, the CU may determine, based on the first information, that the UE context modification required is initiated by the CU based on the first positioning information request. The CU may process the UE context modification required. If the CU fails to process the UE context modification required, the CU may send the UE context modification refuse to the DU. After the DU receives the UE context modification refuse, the DU may send the first positioning information failure to the CU. Therefore, the CU notifies a location management device that the SRS configuration fails. This helps the location management device re-initiate a process of configuring the SRS for the terminal device, to ensure smooth implementation of a positioning function, so that the location management device positions the terminal device. Therefore, this avoids a positioning failure caused by a failure to configure the configuration information of the SRS for the terminal device. In addition, this avoids a waste of measurement resources because the location management device requests a base station to measure the SRS of the terminal device when the location management device considers that SRS configuration for the terminal device succeeds.

A sixth aspect of this application provides a communication method, including:
A DU receives a first positioning information request from a CU, where the first positioning information request is used to request to configure a terminal device to send an SRS and request configuration information of the SRS. The DU sends a UE context modification required to the CU, where the UE context modification required includes first information, and the first information is used to indicate that the UE context modification required is associated with the first positioning information request. The DU receives a UE context modification refuse from the CU. The DU sends a first positioning information failure to the CU, where the first positioning information failure is used to indicate that SRS configuration fails.

In the foregoing technical solution, the DU sends the UE context modification required to the CU, and the UE context modification required includes the first information. The first information is used to indicate that the UE context modification required is associated with the first positioning information request. In this case, the CU may determine, based on the first information, that the UE context modification required is initiated for the first positioning information request. The CU may process the UE context modification required. If the CU fails to process the UE context modification required, the CU may send the UE context modification refuse to the DU. After the DU receives the UE context modification refuse, the DU may send the first positioning information failure to the CU. Therefore, the CU notifies a location management device that the SRS configuration fails. This helps the location management device re-initiate a process of configuring the SRS for the terminal device, to ensure smooth implementation of a positioning function, so that the location management device positions the terminal device. Therefore, this avoids a positioning failure caused by a failure to configure the configuration information of the SRS for the terminal device. In addition, this avoids a waste of measurement resources because the location management device requests a base station to measure the SRS of the terminal device when the location management device considers that SRS configuration for the terminal device succeeds.

Based on any one of the first aspect to the sixth aspect, in a first possible implementation provided in this application, the first information includes a CU trigger, a CU requirement, a CU association, a positioning information request, a positioning trigger, a positioning information trigger, a positioning information request trigger, and a CU positioning information request, or other information indicating that the UE context modification required is initiated to the terminal device in response to the first positioning information request. This is not limited in this application.

In an implementation, several possible types of the first information are provided, and may be the CU trigger, the CU requirement, the CU association, the positioning information request, the positioning trigger, the positioning information trigger, the positioning information request trigger, the CU positioning information request, or the like, so that the CU determines, based on the first information, that the UE context modification required is initiated for the first positioning information request. The CU may process the UE context modification required, and send the UE context modification confirm to the DU. In this way, the DU configures the terminal device to send the SRS.

Based on any one of the first aspect to the sixth aspect or the first possible implementation, in a second possible implementation provided in this application, the UE context modification required includes a cell group configuration (CellGroupConfig) information element, and the cell group configuration information element includes the configuration information of the SRS.

In this implementation, the UE context modification required includes a cell group configuration information element, and the cell group configuration information element includes the configuration information of the SRS. For example, the CU may transparently transmit information in the cell group configuration information element to the terminal device, so that the DU configures the terminal device to send the SRS.

Based on any one of the first aspect to the sixth aspect, the first possible implementation, or the second possible implementation, in a third possible implementation provided in this application, the first information includes indication information.

A seventh aspect of this application provides a communication method, including:
A CU sends a first positioning information request to a DU, where the first positioning information request is used to request to configure a terminal device to send an SRS and request configuration information of the SRS. The CU receives a UE context modification required from the DU, where the UE context modification required includes first information, and the first information is used to indicate that the UE context modification required is in response to the first positioning information request. The CU sends a UE context modification confirm to the DU. The CU receives a first positioning information response from the DU, where the first positioning information response includes the configuration information of the SRS.

In the foregoing technical solution, the DU sends the UE context modification required to the CU, and the UE context modification required includes the first information. The first information is used to indicate that the UE context modification required is in response to the first positioning information request. Therefore, the CU may process the UE context modification required, and send the UE context modification confirm to the DU. In this way, the DU configures the terminal device to send the SRS. After the DU receives the UE context modification confirm, the DU may send the first positioning information response to the CU, and the first positioning information response includes the configuration information of the SRS. Therefore, the CU feeds back the configuration information of the SRS to a location management device, so as to ensure normal implementation of a positioning function, so that the location management device positions the terminal device.

An eighth aspect of this application provides a communication method, including:
A CU sends a first positioning information request to a DU, where the first positioning information request is used to request to configure a terminal device to send an SRS and request configuration information of the SRS. The CU receives a UE context modification required from the DU, where the UE context modification required includes first information, and the first information is used to indicate that the UE context modification required is in triggered by the CU. The CU sends a UE context modification confirm to the DU. The CU receives a first positioning information response from the DU, where the first positioning information response includes the configuration information of the SRS.

In the foregoing technical solution, the DU sends the UE context modification required to the CU, and the UE context modification required includes the first information. The first information is used to indicate that the UE context modification required is triggered by the CU. Therefore, the CU may process the UE context modification required, and send the UE context modification confirm to the DU. In this way, the DU configures the terminal device to send the SRS. After the DU receives the UE context modification confirm, the DU may send the first positioning information response to the CU, and the first positioning information response includes the configuration information of the SRS. Therefore, the CU feeds back the configuration information of the SRS to a location management device, so as to ensure normal implementation of a positioning function, so that the location management device positions the terminal device.

A ninth aspect of this application provides a communication method, including:
A CU sends a first positioning information request to a DU, where the first positioning information request is used to request to configure a terminal device to send an SRS and request configuration information of the SRS. The CU receives a UE context modification required from the DU, where the UE context modification required includes first information, and the first information is used to indicate that the UE context modification required is associated with the first positioning information request. The CU sends a UE context modification confirm to the DU. The CU receives a first positioning information response from the DU, where the first positioning information response includes the configuration information of the SRS.

In the foregoing technical solution, the DU sends the UE context modification required to the CU, and the UE context modification required includes the first information. The first information is used to indicate that the UE context modification required is associated with the first positioning information request. Therefore, the CU may process the UE context modification required, and send the UE context modification confirm to the DU. In this way, the DU configures the terminal device to send the SRS. After the DU receives the UE context modification confirm, the DU may send the first positioning information response to the CU, and the first positioning information response includes the configuration information of the SRS. Therefore, the CU feeds back the configuration information of the SRS to a location management device, so as to ensure normal implementation of a positioning function, so that the location management device positions the terminal device.

A tenth aspect of this application provides a communication method, including:
A CU sends a first positioning information request to a DU, where the first positioning information request is used to request to configure a terminal device to send an SRS and request configuration information of the SRS. The CU receives a UE context modification required from the DU, where the UE context modification required includes first information, and the first information is used to indicate that the UE context modification required is in response to the first positioning information request. The CU sends a UE context modification refuse to the DU. The CU receives a first positioning information failure from the DU, where the first positioning information failure is used to indicate that SRS configuration fails.

In the foregoing technical solution, the DU sends the UE context modification required to the CU, and the UE context modification required includes the first information. The first information is used to indicate that the UE context modification required is in response to the first positioning information request. Therefore, the CU determines that the UE context modification required is initiated for the first positioning information request. The CU may process the UE context modification required. If the CU fails to process the UE context modification required, the CU may send the UE context modification refuse to the DU. Then, the CU receives the first positioning information failure from the DU. Therefore, the CU notifies a location management device that the SRS configuration fails. This helps the location management device re-initiate a process of configuring the SRS for the terminal device, to ensure smooth implementation of a positioning function, so that the location management device positions the terminal device. Therefore, this avoids a positioning failure caused by a failure to configure the configuration information of the SRS for the terminal device. In addition, this avoids a waste of measurement resources because the location management device requests a base station to measure the SRS of the terminal device when the location management device considers that SRS configuration for the terminal device succeeds.

An eleventh aspect of this application provides a communication method, including:
A CU sends a first positioning information request to a DU, where the first positioning information request is used to request to configure a terminal device to send an SRS and request configuration information of the SRS. The CU receives a UE context modification required from the DU, where the UE context modification required includes first information, and the first information is used to indicate that the UE context modification required is triggered by the CU. The CU sends a UE context modification refuse to the DU. The CU receives a first positioning information failure from the DU, where the first positioning information failure is used to indicate that SRS configuration fails.

In the foregoing technical solution, the DU sends the UE context modification required to the CU, and the UE context modification required includes the first information. The first information is used to indicate that the UE context modification required is triggered by the CU. Therefore, the CU determines that the UE context modification required is initiated by the CU based on the first positioning information request. The CU may process the UE context modification required. If the CU fails to process the UE context modification required, the CU may send the UE context modification refuse to the DU. Then, the CU receives the first positioning information failure from the DU. Therefore, the CU notifies a location management device that the SRS configuration fails. This helps the location management device re-initiate a process of configuring the SRS for the terminal device, to ensure smooth implementation of a positioning function, so that the location management device positions the terminal device. Therefore, this avoids a positioning failure caused by a failure to configure the configuration information of the SRS for the terminal device. In addition, this avoids a waste of measurement resources because the location management device requests a base station to measure the SRS of the terminal device when the location management device considers that SRS configuration for the terminal device succeeds.

A twelfth aspect of this application provides a communication method, including:
A CU sends a first positioning information request to a DU, where the first positioning information request is used to request to configure a terminal device to send an SRS and request configuration information of the SRS. The CU receives a UE context modification required from the DU, where the UE context modification required includes first information, and the first information is used to indicate that the UE context modification required is associated with the first positioning information request. The CU sends a UE context modification refuse to the DU. The CU receives a first positioning information failure from the DU, where the first positioning information failure is used to indicate that SRS configuration fails.

In the foregoing technical solution, the DU sends the UE context modification required to the CU, and the UE context modification required includes the first information. The first information is used to indicate that the UE context modification required is associated with the first positioning information request. Therefore, the CU determines that the UE context modification required is initiated for the first positioning information request. The CU may process the UE context modification required. If the CU fails to process the UE context modification required, the CU may send the UE context modification refuse to the DU. Then, the CU receives the first positioning information failure from the DU. Therefore, the CU notifies a location management device that the SRS configuration fails. This helps the location management device re-initiate a process of configuring the SRS for the terminal device, to ensure smooth implementation of a positioning function, so that the location management device positions the terminal device. Therefore, this avoids a positioning failure caused by a failure to configure the configuration information of the SRS for the terminal device. In addition, this avoids a waste of measurement resources because the location management device requests a base station to measure the SRS of the terminal device when the location management device considers that SRS configuration for the terminal device succeeds.

Based on any one of the seventh aspect to the twelfth aspect, in a first possible implementation provided in this application, the first information includes a CU trigger, a CU requirement, a CU association, a positioning information request, a positioning trigger, a positioning information trigger, a positioning information request trigger, and a CU positioning information request, or other information indicating that the UE context modification required is initiated to the terminal device in response to the first positioning information request. This is not limited in this application.

In an implementation, several possible names of the first information are provided, and may be specifically the CU trigger, the CU requirement, the CU association, the positioning information request, the positioning trigger, the positioning information trigger, the positioning information request trigger, the CU positioning information request, or the like, so that the CU determines, based on the first information, that the UE context modification required is initiated for the first positioning information request. The CU may process the UE context modification required, and send the UE context modification confirm to the DU. In this way, the DU configures the terminal device to send the SRS.

Based on any one of the seventh aspect to the twelfth aspect or the first possible implementation of this application, in a second implementation provided in this application, the UE context modification required includes a cell group configuration information element, and the cell group configuration information element includes the configuration information of the SRS. The method further includes: The CU sends the configuration information of the SRS to the terminal device. For example, the CU sends the configuration information of the SRS to the terminal device through a radio resource control reconfiguration (radio resource control reconfiguration, RRC Reconfiguration) message. The RRC reconfiguration message may include the cell group configuration (CellGroupConfig) information element, and the configuration information of the SRS is carried in the cell group configuration information element.

In this implementation, an information element that carries the configuration information of the SRS and that is in the UE context modification required is provided, to facilitate implementation of the solution. For example, if the UE context modification required includes the cell group configuration information element, the CU may transparently transmit information in the cell group configuration information element to the terminal device, so that the DU configures the terminal device to send the SRS.

Based on any one of the seventh aspect to the ninth aspect, or the first implementation or the second implementation provided in this application, in a third possible implementation provided in this application, before the CU sends the first positioning information request to the DU, the method further includes:
The CU receives a second positioning information request from the location management device, where the second positioning information request is used to request to configure the terminal device to send the SRS and request the configuration information of the SRS.

After the CU receives the first positioning information response from the DU, the method further includes:
The CU sends a second positioning information response to the location management device, where the second positioning information response includes the configuration information of the SRS.

In this implementation, the CU receives the second positioning information request from the location management device, to trigger the CU to request the DU to configure the terminal device to send the SRS and request the configuration information of the SRS. After the CU receives the configuration information of the SRS, the CU feeds back the configuration information of the SRS to the location management device, so that the location management device positions the terminal device.

Based on any one of the tenth aspect to the twelfth aspect, or the first implementation or the second implementation provided in this application, in a third possible implementation provided in this application, before the CU sends the first positioning information request to the DU, the method further includes:
The CU receives a second positioning information request from the location management device, where the second positioning information request is used to request to configure the terminal device to send the SRS and request the configuration information of the SRS.

After the CU receives the first positioning information failure from the DU, the method further includes:
The CU sends a second positioning information failure to the location management device, where the second positioning information failure is used to indicate that SRS configuration fails.

In this implementation, the CU receives the second positioning information request from the location management device, to trigger the CU to request the DU to configure the terminal device to send the SRS and request the configuration information of the SRS. After the CU receives the first positioning information failure from the DU, the CU sends the second positioning information failure to the location management device, so as to indicate that the SRS configuration fails. This helps the location management device re-initiate a process of configuring the SRS for the terminal device, to ensure smooth implementation of a positioning function, so that the location management device positions the terminal device.

Based on any one of the seventh aspect to the twelfth aspect, or any one of the first implementation to the third implementation provided in this application, in a fourth possible implementation provided in this application, the first information includes indication information.

A thirteenth aspect of this application provides a communication method, including:
A DU sends a UE context modification required to a CU, where the UE context modification required includes configuration information of an SRS configured by the DU for a terminal device. The DU receives a UE context modification refuse from the CU. The DU sends first information or a first message to the CU, where the first information or the first message is used to indicate that SRS configuration for the terminal device fails.

In the foregoing technical solution, the DU sends the UE context modification required to the CU, where the UE context modification required includes the configuration information of the SRS configured by the DU for the terminal device. The DU receives the UE context modification refuse from the CU, and the DU sends the first information or the first message to the CU, where the first information or the first message is used to indicate that the SRS configuration for the terminal device fails, so that the CU learns that the SRS configuration for the terminal device fails. This helps the CU send corresponding information to the location management device, so as to indicate that the SRS configuration for the terminal device fails. The location management device may re-initiate a process of configuring the SRS for the terminal device, to ensure smooth implementation of a positioning function, so that the location management device positions the terminal device. Therefore, this avoids a positioning failure caused by a failure to configure the configuration information of the SRS for the terminal device. In addition, this avoids a waste of measurement resources because the location management device requests a base station to measure the SRS of the terminal device when the location management device considers that SRS configuration for the terminal device succeeds.

In a possible implementation, the first information is carried in a positioning information update.

In this implementation, a specific carrier of the first information is provided, to facilitate implementation of the solution. The first information is carried in the positioning information update. Therefore, no new message needs to be defined. This helps improve practicability of the solution.

In another possible implementation, the first message includes a positioning information refuse message, a positioning information failure indication message, an SRS configuration failure message, or another message indicating that the SRS configuration for the terminal device fails. This is not specifically limited in this application.

In this implementation, a plurality of possible forms of the first message are provided, so that the DU can implicitly indicate, via the first message, that the SRS configuration for the terminal device fails. The DU indicates, via an existing message, that the SRS configuration for the terminal device fails, and no new message needs to be defined. This facilitates implementation of the solution.

In another possible implementation, before the DU sends the UE context modification required to the CU, the method further includes:
The DU receives a first positioning information request from the CU, where the first positioning information request is used to request to configure the terminal device to send the SRS and request the configuration information of the SRS. The DU sends a first positioning information response to the CU, where the first positioning information response includes the configuration information of the SRS.

In this implementation, the DU receives the first positioning information request from the CU, and the DU may configure the configuration information of the SRS for the terminal device, and feed back the configuration information of the SRS to the CU through the first positioning information response. In this way, the DU determines the configuration information of the SRS for the terminal device based on a requirement of the CU, and feeds back the configuration information of the SRS to the CU.

In another possible implementation, the UE context modification required includes a cell group configuration information element, and the configuration information of the SRS in the UE context modification required is carried in the cell group configuration information element.

In this implementation, an information element that carries the configuration information of the SRS and that is in the UE context modification required is provided, to facilitate implementation of the solution. For example, the CU may transparently transmit information in the cell group configuration information element to the DU, so that the DU configures the SRS for the terminal device.

A fourteenth aspect of this application provides a communication method, including:
A CU receives a UE context modification required from a DU, where the UE context modification required includes configuration information of an SRS configured by the DU for a terminal device. The CU sends a UE context modification refuse to the DU. The CU receives first information or a first message from the DU, where the first information or the first message is used to indicate that SRS configuration for the terminal device fails.

In the foregoing technical solution, the CU receives the UE context modification required from the DU, where the UE context modification required includes the configuration information of the SRS configured by the DU for the terminal device. The CU sends the UE context modification refuse to the DU. The CU receives the first information or the first message from the DU, where the first information or the first message is used to indicate that the SRS configuration for the terminal device fails, so that the CU learns that the SRS configuration for the terminal device fails. This helps the CU send corresponding information to the location management device, so as to indicate that the SRS configuration for the terminal device fails. The location management device may re-initiate a process of configuring the SRS for the terminal device, to ensure smooth implementation of a positioning function, so that the location management device positions the terminal device. Therefore, this avoids a positioning failure caused by a failure to configure the configuration information of the SRS for the terminal device. In addition, this avoids a waste of measurement resources because the location management device requests a base station to measure the SRS of the terminal device when the location management device considers that SRS configuration for the terminal device succeeds.

In a possible implementation, the first information is carried in a positioning information update.

In this implementation, a specific carrier of the first information is provided, to facilitate implementation of the solution. The first information is carried in the positioning information update. Therefore, no new message needs to be defined. This helps improve practicability of the solution.

In another possible implementation, the first message includes a positioning information refuse message, a positioning information failure indication message, an SRS configuration failure message, or another message indicating that the SRS configuration for the terminal device fails. This is not specifically limited in this application.

In this implementation, a plurality of possible forms of the first message are provided, so that the DU can implicitly indicate, via the first message, that the SRS configuration for the terminal device fails. The DU indicates, via an existing message, that the SRS configuration for the terminal device fails, and no new message needs to be defined. This facilitates implementation of the solution.

In another possible implementation, the method further includes: The CU sends second information to the location management device, where the second information is used to indicate that the SRS configuration for the terminal device fails.

In this implementation, the CU sends the second information to the location management device, to indicate that the SRS configuration for the terminal device fails. In this case, the location management device may re-initiate a process of configuring the SRS for the terminal device, to ensure smooth implementation of a positioning function, so that the location management device positions the terminal device. Therefore, this avoids a positioning failure caused by a failure to configure the configuration information of the SRS for the terminal device. In addition, this avoids a waste of measurement resources because the location management device requests a base station to measure the SRS of the terminal device when the location management device considers that SRS configuration for the terminal device succeeds.

In another possible implementation, before the CU receives the UE context modification required from the DU, the method further includes: The CU sends a first positioning information request to the DU, where the first positioning information request is used to request to configure the terminal device to send the SRS and request the configuration information of the SRS. The CU receives a first positioning information response from the DU, where the first positioning information response includes the configuration information of the SRS.

In this implementation, the DU receives the first positioning information request from the CU, and the DU may configure the configuration information of the SRS for the terminal device, and feed back the configuration information of the SRS to the CU through the first positioning information response. In this way, the DU determines the configuration information of the SRS for the terminal device based on a requirement of the CU, and feeds back the configuration information of the SRS to the CU.

In another possible implementation, before the CU sends the first positioning information request to the DU, the method further includes:
The CU receives a second positioning information request from the location management device, where the second positioning information request is used to request to configure the terminal device to send the SRS and request the configuration information of the SRS.

After the CU receives the first positioning information response from the DU, the method further includes: The CU sends a second positioning information response to the location management device, where the second positioning information response includes the configuration information of the SRS.

In this implementation, the CU receives the second positioning information request from the location management device, to trigger the CU to request the DU to configure the terminal device to send the SRS and request the configuration information of the SRS. After the CU receives the configuration information of the SRS, the CU feeds back the configuration information of the SRS to the location management device, so that the location management device positions the terminal device.

In another possible implementation, the UE context modification required includes a cell group configuration information element, and the configuration information of the SRS in the UE context modification required is carried in the cell group configuration information element.

In this implementation, an information element that carries the configuration information of the SRS and that is in the UE context modification required is provided, to facilitate implementation of the solution. For example, the CU may transparently transmit information in the cell group configuration information element to the DU, so that the DU configures the SRS for the terminal device.

A fifteenth aspect of this application provides a communication apparatus, including:
a receiving unit, configured to receive a first positioning information request from a CU, where the first positioning information request is used to request to configure a terminal device to send an SRS and request configuration information of the SRS; and
a sending unit, configured to send a UE context modification required to the CU, where the UE context modification required includes first information, and the first information is used to indicate that the UE context modification required is in response to the first positioning information request.

The receiving unit is further configured to receive a UE context modification confirm from the CU.

The sending unit is further configured to send a first positioning information response to the CU, where the first positioning information response includes the configuration information of the SRS.

A sixteenth aspect of this application provides a communication apparatus, including:
a receiving unit, configured to receive a first positioning information request from a CU, where the first positioning information request is used to request to configure a terminal device to send an SRS and request configuration information of the SRS; and
a sending unit, configured to send a UE context modification required to the CU, where the UE context modification required includes first information, and the first information is used to indicate that the UE context modification required is triggered by the CU.

The receiving unit is further configured to receive a UE context modification confirm from the CU.

The sending unit is further configured to send a first positioning information response to the CU, where the first positioning information response includes the configuration information of the SRS.

A seventeenth aspect of this application provides a communication apparatus, including:
a receiving unit, configured to receive a first positioning information request from a CU, where the first positioning information request is used to request to configure a terminal device to send an SRS and request configuration information of the SRS; and
a sending unit, configured to send a UE context modification required to the CU, where the UE context modification required includes first information, and the first information is used to indicate that the UE context modification required is associated with the first positioning information request.

The receiving unit is further configured to receive a UE context modification confirm from the CU.

The sending unit is further configured to send a first positioning information response to the CU, where the first positioning information response includes the configuration information of the SRS.

An eighteenth aspect of this application provides a communication apparatus, including:
a receiving unit, configured to receive a first positioning information request from a CU, where the first positioning information request is used to request to configure a terminal device to send an SRS and request configuration information of the SRS; and
a sending unit, configured to send a UE context modification required to the CU, where the UE context modification required includes first information, and the first information is used to indicate that the UE context modification required is in response to the first positioning information request.

The receiving unit is further configured to receive a UE context modification refuse from the CU.

The sending unit is further configured to send a first positioning information failure to the CU, where the first positioning information failure is used to indicate that SRS configuration fails.

A nineteenth aspect of this application provides a communication apparatus, including:
a receiving unit, configured to receive a first positioning information request from a CU, where the first positioning information request is used to request to configure a terminal device to send an SRS and request configuration information of the SRS; and
a sending unit, configured to send a UE context modification required to the CU, where the UE context modification required includes first information, and the first information is used to indicate that the UE context modification required is triggered by the CU.

The receiving unit is further configured to receive a UE context modification refuse from the CU.

The sending unit is further configured to send a first positioning information failure to the CU, where the first positioning information failure is used to indicate that SRS configuration fails.

A twentieth aspect of this application provides a communication apparatus, including:
a receiving unit, configured to receive a first positioning information request from a CU, where the first positioning information request is used to request to configure a terminal device to send an SRS and request configuration information of the SRS; and
a sending unit, configured to send a UE context modification required to the CU, where the UE context modification required includes first information, and the first information is used to indicate that the UE context modification required is associated with the first positioning information request.

The receiving unit is further configured to receive a UE context modification refuse from the CU.

The sending unit is further configured to send a first positioning information failure to the CU, where the first positioning information failure is used to indicate that SRS configuration fails.

Based on any one of the fifteenth aspect to the twentieth aspect, in a first possible implementation provided in this application, the first information includes a CU trigger, a CU requirement, a CU association, a positioning information request, a positioning trigger, a positioning information trigger, a positioning information request trigger, and a CU positioning information request, or other information indicating that the UE context modification required is initiated to the terminal device in response to the first positioning information request. This is not limited in this application.

Based on any one of the fifteenth aspect to the twentieth aspect or the first possible implementation, in a second possible implementation provided in this application, the UE context modification required includes a cell group configuration information element, and the cell group configuration information element includes the configuration information of the SRS.

Based on any one of the fifteenth aspect to the twentieth aspect, the first possible implementation, or the second possible implementation, in a third possible implementation provided in this application, the first information includes indication information.

A twenty-first aspect of this application provides a communication apparatus, including:
a sending unit, configured to send a first positioning information request to a DU, where the first positioning information request is used to request to configure a terminal device to send an SRS and request configuration information of the SRS; and
a receiving unit, configured to receive a UE context modification required from the DU, where the UE context modification required includes first information, and the first information is used to indicate that the UE context modification required is in response to the first positioning information request.

The sending unit is further configured to send a UE context modification confirm to the DU.

The receiving unit is further configured to receive a first positioning information response from the DU, where the first positioning information response includes the configuration information of the SRS.

A twenty-second aspect of this application provides a communication apparatus, including:
a sending unit, configured to send a first positioning information request to a DU, where the first positioning information request is used to request to configure a terminal device to send an SRS and request configuration information of the SRS; and
a receiving unit, configured to receive a UE context modification required from the DU, where the UE context modification required includes first information, and the first information is used to indicate that the UE context modification required is triggered by the communication apparatus.

The sending unit is further configured to send a UE context modification confirm to the DU.

The receiving unit is further configured to receive a first positioning information response from the DU, where the first positioning information response includes the configuration information of the SRS.

A twenty-third aspect of this application provides a communication apparatus, including:
a sending unit, configured to send a first positioning information request to a DU, where the first positioning information request is used to request to configure a terminal device to send an SRS and request configuration information of the SRS; and
a receiving unit, configured to receive a UE context modification required from the DU, where the UE context modification required includes first information, and the first information is used to indicate that the UE context modification required is associated with the first positioning information request.

The sending unit is further configured to send a UE context modification confirm to the DU.

The receiving unit is further configured to receive a first positioning information response from the DU, where the first positioning information response includes the configuration information of the SRS.

A twenty-fourth aspect of this application provides a communication apparatus, including:
a sending unit, configured to send a first positioning information request to a DU, where the first positioning information request is used to request to configure a terminal device to send an SRS and request configuration information of the SRS; and
a receiving unit, configured to receive a UE context modification required from the DU, where the UE context modification required includes first information, and the first information is used to indicate that the UE context modification required is in response to the first positioning information request.

The sending unit is further configured to send a UE context modification refuse to the DU.

The receiving unit is further configured to receive a first positioning information failure from the DU, where the first positioning information failure is used to indicate that SRS configuration fails.

A twenty-fifth aspect of this application provides a communication apparatus, including:
a sending unit, configured to send a first positioning information request to a DU, where the first positioning information request is used to request to configure a terminal device to send an SRS and request configuration information of the SRS; and
a receiving unit, configured to receive a UE context modification required from the DU, where the UE context modification required includes first information, and the first information is used to indicate that the UE context modification required is triggered by the communication apparatus.

The sending unit is further configured to send a UE context modification refuse to the DU.

The receiving unit is further configured to receive a first positioning information failure from the DU, where the first positioning information failure is used to indicate that SRS configuration fails.

A twenty-sixth aspect of this application provides a communication apparatus, including:
a sending unit, configured to send a first positioning information request to a DU, where the first positioning information request is used to request to configure a terminal device to send an SRS and request configuration information of the SRS; and
a receiving unit, configured to receive a UE context modification required from the DU, where the UE context modification required includes first information, and the first information is used to indicate that the UE context modification required is associated with the first positioning information request.

The sending unit is further configured to send a UE context modification refuse to the DU.

The receiving unit is further configured to receive a first positioning information failure from the DU, where the first positioning information failure is used to indicate that SRS configuration fails.

Based on any one of the twenty-first aspect to the twenty-sixth aspect, in a first possible implementation provided in this application, the first information includes a CU trigger, a CU requirement, a CU association, a positioning information request, a positioning trigger, a positioning information trigger, a positioning information request trigger, and a CU positioning information request, or other information indicating that the UE context modification required is in response to the first positioning information request. This is not limited in this application.

Based on any one of the twenty-first aspect to the twenty-sixth aspect or the first implementation, in a second possible implementation provided in this application, the UE context modification required includes a cell group configuration information element, and the cell group configuration information element includes the configuration information of the SRS.

Based on any one of the twenty-first aspect to the twenty-third aspect, or in the first possible implementation or the second implementation provided in this application, in a third possible implementation provided in this application, the receiving unit is further configured to:
receive a second positioning information request from a location management device, where the second positioning information request is used to request to configure the terminal device to send the SRS and request the configuration information of the SRS.

The sending unit is further configured to:
send a second positioning information response to the location management device, where the second positioning information response includes the configuration information of the SRS.

Based on any one of the twenty-fourth aspect to the twenty-sixth aspect, or the first implementation or the second implementation provided in this application, in a fourth implementation provided in this application, the receiving unit is further configured to:
receive a second positioning information request from a location management device, where the second positioning information request is used to request to configure the terminal device to send the SRS and request the configuration information of the SRS.

The sending unit is further configured to:
send a second positioning information failure to the location management device, where the second positioning information failure is used to indicate that the SRS configuration fails.

Based on any one of the twenty-first aspect to the twenty-sixth aspect or any one of the first implementation to the fourth implementation provided in this application, in a fifth implementation provided in this application, the first information includes indication information.

A twenty-seventh aspect of this application provides a communication apparatus, including:
a sending unit, configured to send a UE context modification required to a CU, where the UE context modification required includes configuration information of an SRS configured by the communication apparatus for a terminal device; and
a receiving unit, configured to receive a UE context modification refuse from the CU.

The sending unit is further configured to send first information or a first message to the CU, where the first information or the first message is used to indicate that SRS configuration for the terminal device fails.

In a possible implementation, the first information is carried in a positioning information update.

In another possible implementation, the first message includes a positioning information refuse message, a positioning information failure indication message, an SRS configuration failure message, or another message indicating that the SRS configuration for the terminal device fails. This is not specifically limited in this application.

In another possible implementation, the receiving unit is further configured to:
receive a first positioning information request from the CU, where the first positioning information request is used to request the communication apparatus to configure the terminal device to send the SRS and request the configuration information of the SRS.

The sending unit is further configured to:
send a first positioning information response to the CU, where the first positioning information response includes the configuration information of the SRS.

In another possible implementation, the UE context modification required includes a cell group configuration information element, and the configuration information of the SRS in the UE context modification required is carried in the cell group configuration information element.

A twenty-eighth aspect of this application provides a communication apparatus, including:
a receiving unit, configured to receive a user equipment UE context modification required from a DU, where the UE context modification required includes configuration information of an SRS configured by the DU for a terminal device; and
a sending unit, configured to send a UE context modification refuse to the DU.

The receiving unit is further configured to receive first information or a first message from the DU, where the first information or the first message is used to indicate that SRS configuration for the terminal device fails.

In a possible implementation, the first information is carried in a positioning information update.

In another possible implementation, the first message includes a positioning information refuse message, a positioning information failure indication message, an SRS configuration failure message, or another message indicating that the SRS configuration for the terminal device fails. This is not specifically limited in this application.

In another possible implementation, the sending unit is further configured to:
send second information to a location management device, where the second information is used to indicate that the SRS configuration for the terminal device fails.

In another possible implementation, the sending unit is further configured to:
send a first positioning information request to the DU, where the first positioning information request is used to request to configure the terminal device to send the SRS and request the configuration information of the SRS.

The receiving unit is further configured to:
receive a first positioning information response from the DU, where the first positioning information response includes the configuration information of the SRS.

In another possible implementation, the receiving unit is further configured to:
receive a second positioning information request from a location management device, where the second positioning information request is used to request to configure the terminal device to send the SRS and request the configuration information of the SRS.

The sending unit is further configured to:
send a second positioning information response to the location management device, where the second positioning information response includes the configuration information of the SRS.

In another possible implementation, the UE context modification required includes a cell group configuration information element, and the configuration information of the SRS in the UE context modification required is carried in the cell group configuration information element.

A twenty-ninth aspect of this application provides a communication system, including a DU and a CU.

The CU sends a first positioning information request to the CU, where the first positioning information request is used to request to configure a terminal device to send an SRS and request configuration information of the SRS.

The DU receives the first positioning information request from the CU.

The DU sends a UE context modification required to the CU, where the UE context modification required includes first information, and the first information is used to indicate that the UE context modification required is in response to the first positioning information request.

The CU receives the UE context modification required from the DU.

The CU sends a UE context modification confirm to the DU.

The DU receives the UE context modification confirm from the CU.

The DU sends a first positioning information response to the CU, where the first positioning information response includes the configuration information of the SRS.

The CU receives the first positioning information response from the DU.

A thirtieth aspect of this application provides a communication system, including a DU and a CU.

The CU sends a first positioning information request to the CU, where the first positioning information request is used to request to configure a terminal device to send an SRS and request configuration information of the SRS.

The DU receives the first positioning information request from the CU.

The DU sends a UE context modification required to the CU, where the UE context modification required includes first information, and the first information is used to indicate that the UE context modification required is in response to the first positioning information request.

The CU receives the UE context modification required from the DU.

The CU sends a UE context modification refuse to the DU.

The DU receives the UE context modification refuse from the CU.

The DU sends a first positioning information failure to the CU, where the first positioning information failure is used to indicate that SRS configuration fails.

The CU receives the first positioning information failure from the DU.

Based on the twenty-ninth aspect or the thirtieth aspect, in a first implementation provided in this application, the first information includes a CU trigger, a CU requirement, a CU association, a positioning information request, a positioning trigger, a positioning information trigger, a positioning information request trigger, and a CU positioning information request, or other information indicating that the UE context modification required is initiated to the terminal device in response to the first positioning information request.

Based on the twenty-ninth aspect, the thirtieth aspect, or the first implementation provided in this application, in a second implementation provided in this application, the UE context modification required includes a cell group configuration (CellGroupConfig) information element, and the cell group configuration information element includes the configuration information of the SRS.

Based on the twenty-ninth aspect, or the first implementation or the second implementation provided in this application, in a third implementation provided in this application, the communication system further includes a location management device.

The location management device sends a second positioning information request to the CU, where the second positioning information request is used to request to configure the terminal device to send the SRS and request the configuration information of the SRS.

The CU receives the second positioning information request from the location management device.

After the CU receives the first positioning information response from the DU, the method further includes:
The CU sends a second positioning information response to the location management device, where the second positioning information response includes the configuration information of the SRS.

The location management device receives the second positioning information response from the CU.

Based on the thirtieth aspect, or the first implementation or the second implementation provided in this application, in a fourth implementation provided in this application, the communication system further includes a location management device.

The location management device sends a second positioning information request to the CU, where the second positioning information request is used to request to configure the terminal device to send the SRS and request the configuration information of the SRS.

The CU receives the second positioning information request from the location management device.

After the CU receives the first positioning information failure from the DU:
The CU sends a second positioning information failure to the location management device, where the second positioning information failure is used to indicate that SRS configuration fails.

The location management device receives the second positioning information failure from the CU.

A thirty-first aspect of this application provides a communication system, including a DU and a CU.

A DU sends a UE context modification required to a CU, where the UE context modification required includes configuration information of an SRS configured by the DU for a terminal device.

The CU receives the UE context modification required from the DU.

The CU sends a UE context modification refuse to the DU.

The DU receives the UE context modification refuse from the CU.

The DU sends first information or a first message to the CU, where the first information or the first message is used to indicate that SRS configuration for the terminal device fails.

The CU receives the first information or the first message from the CU.

In a possible implementation, the first information is carried in a positioning information update.

In another possible implementation, the first message includes a positioning information refuse message, a positioning information failure indication message, an SRS configuration failure message, or another message indicating that the SRS configuration for the terminal device fails. This is not specifically limited in this application.

In another possible implementation, before the DU sends the UE context modification required to the CU, the method further includes:
The CU sends a first positioning information request to the CU, where the first positioning information request is used to request to configure a terminal device to send an SRS and request configuration information of the SRS.

The DU receives the first positioning information request from the CU.

The DU sends a first positioning information response to the CU, where the first positioning information response includes the configuration information of the SRS.

The CU receives the first positioning information response from the CU.

In another possible implementation, the UE context modification required includes a cell group configuration information element, and the configuration information of the SRS in the UE context modification required is carried in the cell group configuration information element.

In another possible implementation, the communication system further includes a location management device, and the method further includes:
The CU sends second information to a location management device, where the second information is used to indicate that the SRS configuration for the terminal device fails.

The location management device receives the second information from the CU.

In another possible implementation, before the CU sends the first positioning information request to the DU, the communication system further includes a location management device, and the method further includes:
The location management device sends a second positioning information request to the CU, where the second positioning information request is used to request to configure the terminal device to send the SRS and request the configuration information of the SRS.

The CU receives the second positioning information request from the location management device.

After the CU receives the first positioning information response from the DU, the method further includes:
The CU sends a second positioning information response to the location management device, where the second positioning information response includes the configuration information of the SRS.

The location management device receives the second positioning information response from the CU.

A thirty-second aspect of this application provides a communication apparatus. The communication apparatus includes a processor and a memory. The memory stores a computer program or computer instructions, and the processor is configured to invoke and run the computer program or the computer instructions stored in the memory, so that the processor implements any one of the implementations of the first aspect to the fourteenth aspect.

Optionally, the communication apparatus further includes a transceiver, and the processor is configured to control the transceiver to perform any one of the implementations of the first aspect to the fourteenth aspect.

A thirty-third aspect of this application provides a communication apparatus. The communication apparatus includes a processor. The processor is configured to invoke a computer program or computer instructions in a memory, so that the processor implements any one of the implementations of the first aspect to the fourteenth aspect.

Optionally, the communication apparatus further includes a transceiver, and the processor is configured to control the transceiver to perform any one of the implementations of the first aspect to the fourteenth aspect.

Optionally, the processor is integrated with the memory.

A thirty-fourth aspect of embodiments of this application provides a computer program product including computer instructions. When the computer program product runs on a computer, the computer is enabled to perform any one of the implementations of the first aspect to the fourteenth aspect.

A thirty-fifth aspect of embodiments of this application provides a computer-readable storage medium, including computer instructions. When the computer instructions are run on a computer, the computer is enabled to perform any one of the implementations of the first aspect to the sixth aspect.

A thirty-sixth aspect of embodiments of this application provides a chip apparatus, including a processor, configured to invoke a computer program or computer instructions in a memory, to enable the processor to perform any one of the implementations of the first aspect to the fourteenth aspect.

Optionally, the processor is coupled to the memory through an interface.

It can be learned from the foregoing technical solutions that embodiments of this application have the following advantages.

It can be learned from the foregoing technical solutions that a DU receives a first positioning information request from a CU, where the first positioning information request is used to request to configure a terminal device to send an SRS and request configuration information of the SRS. The DU sends a UE context modification required to the CU, where the UE context modification required includes first information, and the first information is used to indicate that the UE context modification required is in response to the first positioning information request. Then, the DU receives a UE context modification confirm from the CU, and the DU sends a first positioning information response to the CU, where the first positioning information response includes the configuration information of the SRS. It can be learned that, in the technical solutions of this application, the DU sends the UE context modification required to the CU, and the UE context modification required includes the first information. The first information is used to indicate that the UE context modification required is in response to the first positioning information request, so that the CU determines that the UE context modification required is initiated for the first positioning information request. The CU may process the UE context modification required, and send the UE context modification confirm to the DU. In this way, the DU configures the configuration information of the SRS for the terminal device and sends the configuration information of the SRS to the terminal device. After the DU receives the UE context modification confirm, the DU may send the first positioning information response to the CU, and the first positioning information response includes the configuration information of the SRS. Therefore, the CU feeds back the configuration information of the SRS to a location management device, so as to ensure normal implementation of a positioning function, so that the location management device positions the terminal device.

### BRIEF DESCRIPTION OF DRAWINGS

FIG. 1 is a diagram of a communication system according to an embodiment of this application;
FIG. 2 is a diagram of a structure of an access network device according to an embodiment of this application;
FIG. 3 is a diagram of an embodiment of a communication method according to an embodiment of this application;
FIG. 4 is a diagram of another embodiment of a communication method according to an embodiment of this application;
FIG. 5 is a diagram of a structure of a communication apparatus according to an embodiment of this application; and
FIG. 6 is a diagram of another structure of a communication apparatus according to an embodiment of this application.

### DESCRIPTION OF EMBODIMENTS

Embodiments of this application provide a communication method and a communication apparatus, to ensure normal implementation of a positioning function, so that a location management device positions a terminal device.

The following clearly and completely describes the technical solutions in embodiments of this application with reference to the accompanying drawings in embodiments of this application.

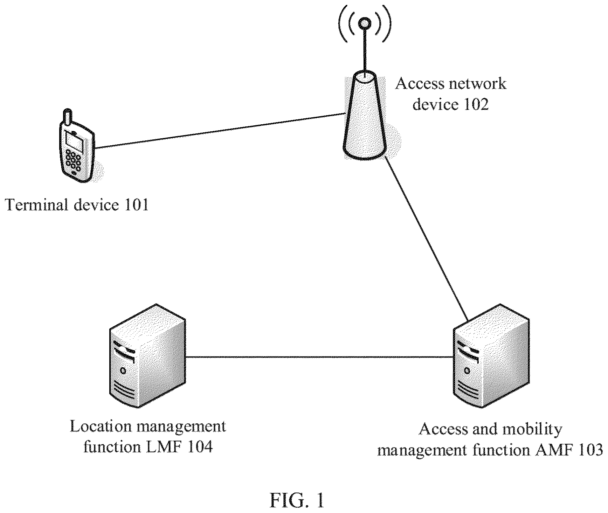

FIG. 1 is a diagram of a communication system according to an embodiment of this application. The communication system includes an access network device 102, an access and mobility management function (access and mobility management function, AMF) 103, and a location management function (location management function, LMF) device 104.

Optionally, a terminal device 101 is connected to the access network device 102 through an interface, the access network device is connected to the AMF 103 through an interface, and the AMF 104 is connected to the LMF 104 through an interface. The LMF 104 is configured to perform positioning calculation and management on a location of the terminal device 101.

For example, the terminal device 101 is connected to the access network device 103 through an NR-Uu interface, and the access network device 102 is connected to the AMF 103 through an NG-C interface. The AMF 103 is connected to the LMF 104 through an NL1 interface.

FIG. 1 shows merely an example in which the communication system includes the access network device 102. In actual application, the communication system may further include more access network devices. This is not specifically limited in this application.

The following describes the access network device and the terminal device provided in this application.

The access network device is an apparatus deployed in a radio access network for providing a wireless communication function for the terminal device. The access network device may include a base station. The base station includes a macro base station, a micro base station (which is also referred to as a small cell), a relay station, an access point (access point, AP), a wearable device, a vehicle-mounted device, or the like in various forms. The base station may further include a transmission and reception point (transmission and reception point, TRP), a transmission measurement function (transmission measurement function, TMF), or the like. For example, the base station in this application may be a base station in new radio (new radio, NR). The base station in the 5G NR may further include a transmission reception point (transmission reception point, TRP), a transmission point (transmission point, TP), a next generation NodeB (next Generation NodeB, gNB), or an evolved NodeB (evolved NodeB, eNB or eNodeB) in a long term evolution (long term evolution, LTE) system.

The terminal device may also be referred to as user equipment (user equipment, UE), a mobile station (mobile station, MS), a mobile terminal (mobile terminal, MT), or the like. A terminal device is a device that includes a wireless communication function (providing voice/data connectivity to a user), for example, a handheld device or a vehicle-mounted device having a wireless connection function. Currently, the terminal device may include a mobile phone (mobile phone), a tablet computer, a laptop computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The AMF 103 is responsible for access control, registration management, service management, mobility management, and the like for the terminal device to access a network.

The LMF 104 is configured to perform positioning calculation and management on the location of the terminal device.

In this application, a name of the AMF 103 may change with evolution of the communication system. In a current communication system or a future communication system, any functional network element that has another name and has a function similar to that of the AMF 103 may be understood as the AMF 103 in this application, and is applicable to the communication method provided in embodiments of this application.

In this application, the LMF is a name in the current communication system. In the future communication system, a name of the LMF may change with evolution of the communication system. Therefore, the LMF is referred to as a location management device below to describe the technical solutions of this application. The location management device is configured to perform positioning calculation on the position of the terminal device. In the current communication system or the future communication system, any functional network element that has another name and has a function similar to that of the location management device may be understood as the location management device in this application, and is applicable to the communication method provided in this application.

The following describes a possible structure of the access network device in the access network in FIG. 1. Herein, an example in which the access network device includes a gNB is used for description. This is also applicable to other types of access network devices.

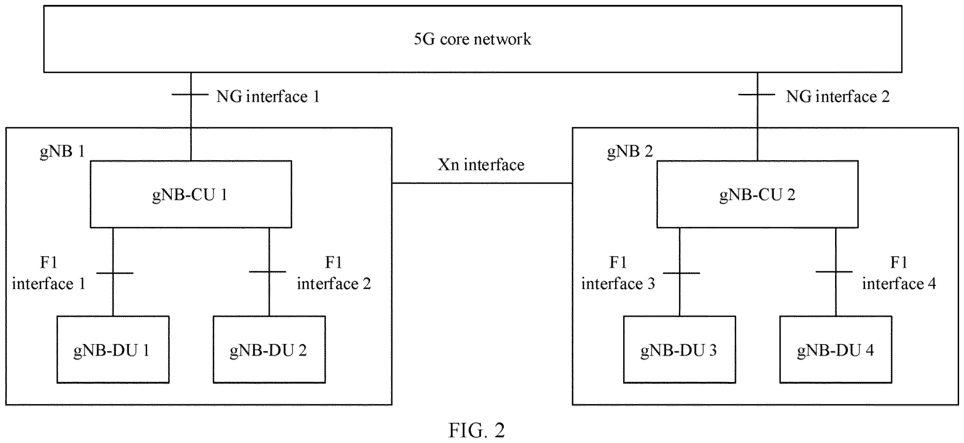

FIG. 2 is a diagram of a structure of a gNB according to an embodiment of this application. Refer to FIG. 2. In a 5G communication system, gNBs are connected to each other through an Xn interface, and the gNB is connected to a 5th generation mobile communication technology core (the 5th generation mobile communication technology core, 5GC) through an NG interface. As shown in FIG. 2, a gNB 1 and a gNB 2 are connected to each other through the Xn interface. The gNB 1 is connected to the 5GC through an NG interface 1, and the gNB 2 is connected to the 5GC through an NG interface 2.

The gNB may include a CU and a DU. In other words, functions of the base station are divided, where some functions of the base station are deployed on a gNB-CU, and remaining functions are deployed on a gNB-DU. A plurality of gNB-DUs share one gNB-CU. This can reduce costs and facilitate network expansion. For example, as shown in FIG. 2, the gNB 1 includes a gNB-CU 1, a gNB-DU 1, and a gNB-DU 2. The gNB-CU 1 is connected to the gNB-DU 1 through an F1 interface 1, and is connected to the gNB-DU 2 through an F1 interface 2. A structure of the gNB 2 is similar to a structure of the gNB 1. Details are not described herein again.

FIG. 2 is merely an example. One gNB-CU may be connected to one or more gNB-DUs. This is not specifically limited in this application.

Separation of the gNB-CU and the gNB-DU is based on protocol stacks. For example, protocol stacks of a radio resource control (radio resource control, RRC) layer, a service data adaptation protocol (service data adaptation protocol, SDAP) layer, and a packet data convergence protocol (packet data convergence protocol, PDCP) layer are deployed on the gNB-CU. Protocol stacks of a radio link control (radio link control, RLC) layer, a media access control (media access control, MAC) layer, and a physical (physical, PHY) layer are deployed on the gNB-DU. The gNB-CU and the gNB-DU are connected through an F 1 interface. The foregoing example is merely used to describe the gNB-CU and the gNB-DU. Protocol stacks deployed on the gNB-CU and the gNB-DU are not limited in this application.

In this application, in the following solution in which the access network device uses a CU-DU structure, the gNB-CU is referred to as a CU for short, and the gNB-DU is referred to as a DU for short.

In an uplink positioning technology or an uplink-downlink positioning technology, a location management device requests the CU in the access network device to configure an SRS for a terminal device. The CU sends a positioning information request to the DU in the access network device, where the positioning information request is used to request to configure the terminal device to send the SRS and request configuration information of the SRS. The DU determines the configuration information of the SRS, and the DU may send a positioning information response to the CU. The positioning information response includes the configuration information of the SRS. After the CU receives the configuration information of the SRS, the CU may feed back the configuration information of the SRS to the location management device. In this way, the location management device positions the terminal device.

After the DU determines or updates the configuration information of the SRS, the DU needs to initiate a user equipment context modification required (UE context modification required) to the CU. The UE context modification required includes the configuration information of the SRS. The configuration information of the SRS may be included in a cell group configuration (CellGroupConfig) information element. After receiving a cell group configuration information element of the DU, the CU may send the cell group configuration information element to the terminal device. For example, the CU may transparently transmit the cell group configuration information element to the terminal device. Then, the CU sends a UE context modification confirm (UE context modification confirm) to the DU, to indicate that providing the configuration information to the terminal device is completed.

The inventor finds that in a process in which the location management device requests the access network device to configure the configuration information of the SRS for the terminal device, two procedures (a positioning information exchange procedure between the CU and the DU and a context modification required procedure between the CU and the DU) need to be performed between the CU and the DU of the access network device to complete the process. The terminal device may obtain the configuration information of the SRS configured by the DU for the terminal device, and the CU may obtain the configuration information of the SRS of the terminal device, and then send the configuration information of the SRS of the terminal device to the location management device. Therefore, the location management device positions the terminal device.

However, in the positioning information exchange procedure between the DU and the CU, after the CU sends the positioning information request, the CU waits for the positioning information response to the positioning information request. The CU does not process another procedure (for example, a UE context modification required procedure) related to the terminal device. As a result, the DU cannot send the configuration information of the SRS to the terminal device through the CU. The DU waits for a UE context modification response to the UE context modification required, and then feeds back the positioning information response to the CU. Because the CU does not process another procedure related to the terminal device, the DU cannot feed back the positioning information response to the CU. Consequently, the CU cannot feed back the configuration information of the SRS to the location management device. Therefore, in the positioning information exchange procedure between the DU and the CU, the DU cannot send the configuration information of the SRS to the terminal device through the CU and feed back the configuration information of the SRS to the CU. Consequently, the CU cannot feed back the configuration information of the SRS to the location management device, and the location management device cannot position the terminal device.

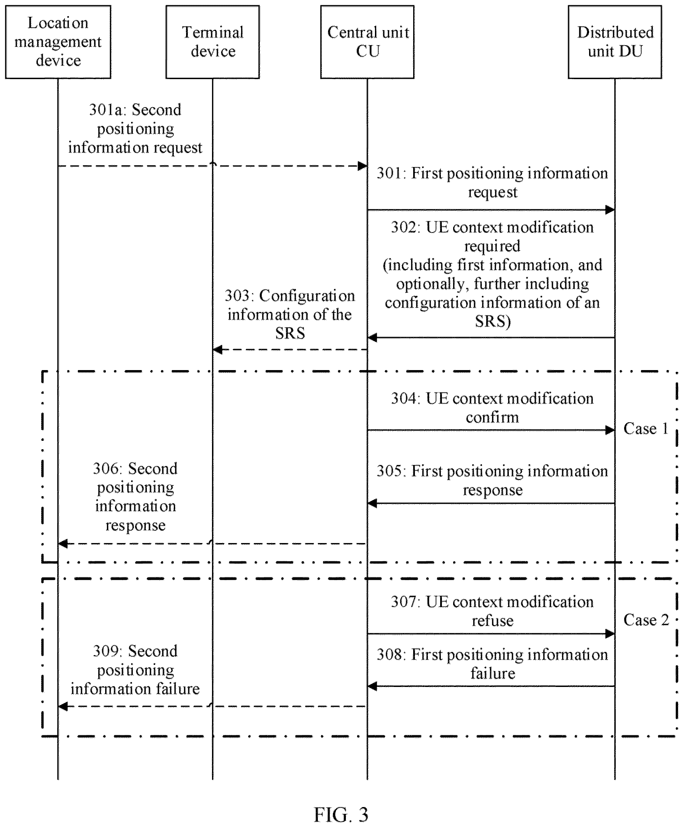

This application provides a corresponding technical solution, to ensure that a DU successfully configures an SRS for a terminal device, and a CU sends configuration information of the SRS to the CU, so that the CU feeds back the configuration information of the SRS to a location management device. This ensures normal implementation of a positioning function, and implements positioning on the terminal device. For details, refer to related descriptions of the embodiment shown in FIG. 3 below.

The DU first sends a positioning information response (the positioning information response includes the configuration information of the SRS) to the CU, and then sends a UE context modification required to the CU, where the UE context modification required includes the configuration information of the SRS. In this case, the CU sends the configuration information of the SRS to an LMF, so that the LMF positions the terminal device. However, in this case, it cannot be ensured that the CU can correctly receive and process the UE context modification required. To be specific, in a process in which the DU sends the configuration information of the SRS to the CU via the UE context modification required and configures the configuration information of the SRS for the terminal device, the CU may not successfully process the UE context modification required. For example, if the CU does not successfully send the configuration information of the SRS to the terminal device, or the CU does not correctly receive the UE context modification required of the DU, the terminal device cannot obtain the configuration information of the SRS. Consequently, the DU cannot send the configuration information of the SRS to the terminal device through the CU, the terminal device cannot obtain the configuration information of the SRS, and the location management device fails to position the terminal device.

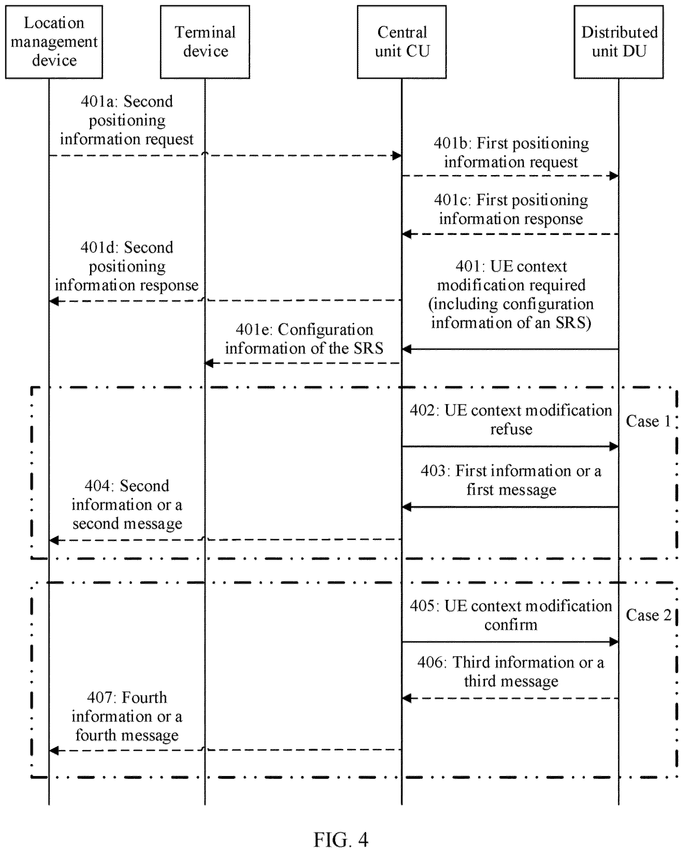

This application provides a corresponding technical solution. In this way, the CU learns an SRS configuration status of the terminal device, so that the CU notifies the location management device of the SRS configuration status of the terminal device, to ensure normal implementation of a positioning function, so that the terminal device is positioned. For details, refer to related descriptions of the embodiment shown in FIG. 4 below.

The technical solutions of this application are described below with reference to specific embodiments.

FIG. 3 is a diagram of an embodiment of a communication method according to an embodiment of this application. Refer to FIG. 3. The communication method includes the following steps.

301: A CU sends a first positioning information request (positioning information request) to a DU. Correspondingly, the DU receives the first positioning information request from the CU.

The first positioning information request is used to request to configure a terminal device to send an SRS and request configuration information of the SRS.

It should be noted that, optionally, there are a plurality of manners in which the first positioning information request is used to request to configure the terminal device to send the SRS and request the configuration information of the SRS. The following describes several possible examples. This application is also applicable to another manner. This is not specifically limited in this application.
1. The first positioning information request may be carried in a message, and the message may be used to request to configure the terminal device to send the SRS and request the configuration information of the SRS. For example, the first positioning information request is carried in a first positioning information request message.
2. The first positioning information request includes an information element in the message, and the information element may be used to request to configure the terminal device to send the SRS and request the configuration information of the SRS.
3. A type, a format, or a name of the message in which the first positioning information request is carried may be used to request to configure the terminal device to send the SRS and request the configuration information of the SRS. This is not specifically limited in this application.

Optionally, the embodiment shown in FIG. 3 further includes step 301a, and step 301a may be performed before step 301.

301a: A location management device sends a second positioning information request to the CU.

The second positioning information request is used to request positioning information of the terminal device. The positioning information of the terminal device includes the configuration information of the SRS. The location management device may be an LMF device.

It should be noted that, optionally, there are a plurality of manners in which the second positioning information request is used to request the positioning information of the terminal device. The following describes several possible examples. This application is also applicable to another manner. This is not specifically limited in this application.
1. The second positioning information request may be carried in a message, and the message is used to request the positioning information of the terminal device. For example, the second positioning information request is carried in a second positioning information request message.
2. The second positioning information request includes an information element in the message, and the information element is used to request the positioning information of the terminal device.
3. A type, a format, or a name of the message in which the second positioning information request is carried is used to request the positioning information of the terminal device.

302: The DU sends a UE context modification required (UE context modification required) to the CU. The UE context modification required includes first information. Correspondingly, the CU receives the UE context modification required from the DU.

The first information is used to indicate that the UE context modification required is in response to (in response to) the first positioning information request. In other words, the first information is used to indicate that the UE context modification required is triggered by the CU, or the first information is used to indicate that the UE context modification required is associated with the first positioning information request.

Therefore, it can be learned that the UE context modification required is a response to the first positioning information request initiated in the process of step 301. To be specific, for the CU, after the CU initiates the first positioning information request, the CU may receive the UE context modification required including the first information. When triggered by step 301, the DU determines or updates the configuration information of the SRS of the terminal device for the terminal device. Therefore, the DU requests, via the UE context modification required, the CU to send the configuration information of the SRS to the terminal device. Therefore, the DU may indicate, to the CU via the first information carried in the UE context modification required, that the UE context modification required is in response to the first positioning information request, so that the CU processes the UE context modification required.

Optionally, the first information includes an information element in the UE context modification required. The DU indicates, to the CU via the information element of the UE context modification required, that the UE context modification required is in response to the first positioning information request.

The information element of the UE context modification required is, for example, a CU triggered (CU triggered) information element, a CU required (CU required) information element, a positioning information request information element, a positioning triggered (positioning triggered) information element, a positioning information triggered (positioning information triggered) information element, a positioning information request triggered (positioning information request triggered) information element, or a CU positioning information request (positioning information required by CU) information element.

For example, as shown in Table 1, the UE context modification required includes the CU triggered information element, and a value of the CU triggered information element is "true (true)", to indicate that the UE context modification required is a UE context modification initiated to the terminal device for the first positioning information request, so as to update the configuration information of the SRS for the terminal device.

**Table 1**

| Information element/group name (IE/Group Name) | Information element type and reference (IE type and reference) |
|---|---|
| Central unit triggered (CU triggered) | Enumerated ENUMERATED (true (true), ...) |

Optionally, the first information further includes indication information. The DU indicates, to the CU via the indication information, that the UE context modification required is in response to the first positioning information request.

For example, when a value of the indication information is "true (true)", it indicates that the UE context modification required is in response to the first positioning information request. Alternatively, when a value of the indication information is "1", it indicates that the UE context modification required is in response to the first positioning information request.

It can be learned that the first information may be represented in a form of an information element, or may be represented in a form of indication information. In actual application, the first information may alternatively be other information indicating that the UE context modification required has an association relationship with the first positioning information request, or information indicating that the UE context modification required is in response to the first positioning information request, or information indicating that the UE context modification required is triggered by the CU. This is not specifically limited in this application.

Optionally, the UE context modification required includes the configuration information of the SRS. Alternatively, the DU sends the configuration information of the SRS to the CU via another message or other information. For example, the DU sends the configuration information of the SRS to the CU via a protocol message between the CU and the DU, or the DU sends the configuration information of the SRS to the CU via a newly defined message. This is not specifically limited in this application. The following describes the technical solution of this application by using an example in which the configuration information of the SRS is carried in the UE context modification required.

In an implementation, the UE context modification required includes a cell group configuration information element, and the cell group configuration information element includes the configuration information of the SRS, that is, the configuration information of the SRS is carried in the cell group configuration information element. In this way, the DU configures, through the CU, the terminal device to send the SRS. Therefore, after the CU initiates the first positioning information request, the CU may receive the UE context modification required including the cell group configuration (cellgroupconfig) information element.

It should be noted that, optionally, the UE context modification required may be used to modify a UE context. There are a plurality of specific implementations. The following uses several possible implementations as examples. This application is also applicable to another manner. This is not specifically limited in this application.
1. The UE context modification required may be carried in a message, and the message may be used to modify the UE context. For example, the message is a UE context modification required message.
2. The UE context modification required includes an information element in the message, and the information element may be used to modify the UE context.
3. A type, a format, or a name of the message in which the UE context modification required is carried may be used to modify the UE context.

Optionally, the embodiment shown in FIG. 3 further includes step 303, and step 303 may be performed after step 302.

303: The CU sends the configuration information of the SRS to the terminal device.

In a possible implementation, the CU sends an RRC reconfiguration message to the terminal device, where the RRC reconfiguration message includes the configuration information of the SRS. Optionally, the configuration information of the SRS is carried in the cell group configuration information element.

Optionally, if the cell group configuration information element is included in the UE context modification required in step 302, the configuration information of the SRS is carried in the cell group configuration information element. The CU may transmit information in the cell group configuration information element to the terminal device.

For example, the CU may send information in the cell group configuration information element to the terminal device via the RRC reconfiguration message. For example, the CU may transparently transmit the information in the cell group configuration information element to the terminal device.

The following describes two cases in which the CU processes the UE context modification required.

Case 1: If the CU successfully processes the UE context modification required, step 304 and step 305 are performed.

Case 2: If the CU fails to process the UE context modification required, step 307 and step 308 are performed.

Optionally, that the CU fails to process the UE context modification required includes that the CU fails to receive the UE context modification required, or that the CU fails to send the cell group configuration information element to the terminal device, or may include another reason. This is not specifically limited in this application.

304: The CU sends a UE context modification confirm (UE context modification confirm) to the DU. Correspondingly, the DU receives the UE context modification confirm from the CU.

If the CU successfully sends the configuration information of the SRS to the terminal device, the CU sends the UE context modification confirm to the DU, to indicate that SRS configuration for the terminal device succeeds.

It should be noted that, optionally, the UE context modification confirm may be used to indicate that the SRS configuration for the terminal device succeeds. There are a plurality of specific indication manners. The following describes several possible manners. This application is also applicable to another manner. This is not specifically limited in this application.
1. The UE context modification confirm may be carried in a message, and the message may be used to indicate that the SRS configuration for the terminal device succeeds. For example, the UE context modification confirm is carried in a UE context modification confirm message.
2. The UE context modification confirm includes an information element in the message, and the information element may be used to indicate that the SRS configuration for the terminal device succeeds.
3. A type, a format, or a name of the message in which the UE context modification confirm is carried may be used to indicate that the SRS configuration for the terminal device succeeds.

305: The DU sends a first positioning information response (positioning information response) to the CU. Correspondingly, the CU receives the first positioning information response from the DU.

The first positioning information response includes the configuration information of the SRS.

Specifically, the DU feeds back the configuration information of the SRS to the CU, so that the CU sends the configuration information of the SRS to the location management device. Therefore, the location management device positions the terminal device.

It should be noted that, optionally, the first positioning information response may be used to indicate that the SRS configuration for the terminal device succeeds. There are a plurality of specific indication manners. The following describes several possible manners. This application is also applicable to another manner. This is not specifically limited in this application.
1. The first positioning information response may be carried in a message, and the message includes the configuration information of the SRS. The message may be used to indicate that the SRS configuration for the terminal device succeeds. The first positioning information response is carried in a first positioning information response message.
2. The first positioning information response includes an information element in the message, the configuration information of the SRS is carried in the information element, and the information element may be used to indicate that the SRS configuration for the terminal device succeeds.
3. A type, a format, or a name of the message in which the first positioning information response message is carried may be used to indicate that the SRS configuration for the terminal device succeeds.

Optionally, based on step 304 and step 305, the embodiment shown in FIG. 3 further includes step 306. Step 306 may be performed after step 305.

306: The CU sends a second positioning information response to the location management device. Correspondingly, the location management device receives the second positioning information response from the CU.

The second positioning information response includes the configuration information of the SRS. Therefore, the location management device positions the terminal device based on the configuration information of the SRS.

It should be noted that, optionally, the second positioning information response may be used to indicate that the SRS configuration for the terminal device succeeds. There are a plurality of specific indication manners. The following describes several possible manners. This application is also applicable to another manner. This is not specifically limited in this application.
1. The second positioning information response may be carried in a message, and the message may be used to indicate that the SRS configuration for the terminal device succeeds. For example, the second positioning information response is carried in a second positioning information response message.
2. The second positioning information response includes an information element in the message, and the information element may be used to indicate that the SRS configuration for the terminal device succeeds.
3. A type, a format, or a name of the message in which the second positioning information response message is carried may be used to indicate that the SRS configuration for the terminal device succeeds.

307: The CU sends a UE context modification refuse (UE context modification refuse) to the DU. Correspondingly, the DU receives the UE context modification refuse from the CU.

If the CU fails to process the UE context modification required, the CU sends the UE context modification refuse to the DU. For example, if the CU fails to send the configuration information of the SRS to the terminal device, or the terminal device fails to receive the configuration information of the SRS, and feeds back a failure indication to the CU, the CU sends the UE context modification refuse to the DU, to indicate that the SRS configuration for the terminal device fails.

It should be noted that, optionally, when the CU cannot send the configuration information of the SRS to the terminal device because the CU cannot schedule the terminal device, the CU may also send the UE context modification refuse to the DU, to indicate that the SRS configuration for the terminal device fails.

It should be noted that, optionally, the UE context modification refuse may be used to indicate that the SRS configuration for the terminal device fails. There are a plurality of specific indication manners. The following describes several possible manners. This application is also applicable to another manner. This is not specifically limited in this application.
1. The UE context modification refuse may be carried in a message, and the message may be used to indicate that the SRS configuration for the terminal device fails. For example, the UE context modification refuse is carried in a UE context modification refuse message.
2. The UE context modification refuse includes an information element in the message, and the information element may be used to indicate that the SRS configuration for the terminal device fails.
3. A type, a format, or a name of the message in which the UE context modification refuse is carried may be used to indicate that the SRS configuration for the terminal device fails. This is not specifically limited in this application.

308: The DU sends a first positioning information failure (positioning information failure) to the CU. Correspondingly, the CU receives the first positioning information failure from the DU.

The first positioning information failure is used to indicate that the SRS configuration for the terminal device fails. Therefore, the CU feeds back a failure of the SRS configuration for the terminal device to the location management device. The location management device may re-initiate a process of configuring the SRS for the terminal device.

It should be noted that, optionally, there are a plurality of manners in which the first positioning information failure is used to indicate that the SRS configuration for the terminal device fails. The following describes several possible manners. This application is also applicable to another manner. This is not specifically limited in this application.
1. The first positioning information failure may be carried in a message, and the message may be used to indicate that the SRS configuration for the terminal device fails. For example, the first positioning information failure is carried in a first positioning information failure message.
2. The first positioning information failure includes an information element in the message, and the information element may be used to indicate that the SRS configuration for the terminal device fails.
3. A type, a format, or a name of the message in which the first positioning information failure is carried may be used to indicate that the SRS configuration for the terminal device fails.

Optionally, based on step 307 and step 308, the embodiment shown in FIG. 3 further includes step 309. Step 309 may be performed after step 308.

309: The CU sends a second positioning information failure to the location management device. Correspondingly, the location management device receives the second positioning information failure from the CU.

The second positioning information failure is used to indicate that the SRS configuration for the terminal device fails. The location management device may re-initiate a process of configuring the SRS for the terminal device.

It should be noted that, optionally, there are a plurality of manners in which the second positioning information failure is used to indicate that the SRS configuration for the terminal device fails. The following describes several possible manners. This application is also applicable to another manner. This is not specifically limited in this application.
1. The second positioning information failure may be carried in a message, and the message may be used to indicate that the SRS configuration for the terminal device fails. For example, the second positioning information failure is carried in a second positioning information failure message.
2. The second positioning information failure includes an information element in the message, and the information element may be used to indicate that the SRS configuration for the terminal device fails.
3. A type, a format, or a name of the message in which the second positioning information failure is carried may be used to indicate that the SRS configuration for the terminal device fails. This is not specifically limited in this application.

In this embodiment of this application, the DU receives a first positioning information request from the CU, where the first positioning information request is used to request to configure the terminal device to send the SRS and request the configuration information of the SRS. The DU sends a UE context modification required to the CU, where the UE context modification required includes first information, and the first information is used to indicate that the UE context modification required is in response to the first positioning information request. Then, the DU receives a UE context modification confirm from the CU, and the DU sends a first positioning information response to the CU, where the first positioning information response includes the configuration information of the SRS. It can be learned that, in the technical solutions of this application, the DU sends the UE context modification required to the CU, and the UE context modification required includes the first information. The first information is used to indicate that the UE context modification required is in response to the first positioning information request, so that the CU determines that the UE context modification required is initiated for the first positioning information request. The CU may process the UE context modification required, and send the UE context modification confirm to the DU. In this way, the DU configures and provides the configuration information of the SRS for the terminal device. In other words, it is ensured that the SRS configuration for the terminal device succeeds. After the DU receives the UE context modification confirm, the DU may send the first positioning information response to the CU, and the first positioning information response includes the configuration information of the SRS. Therefore, the CU feeds back the configuration information of the SRS to the location management device, to ensure normal implementation of a positioning function, so that the terminal device is positioned.

This application further provides another solution. A CU sends a first positioning information request to a DU. For the first positioning information request, refer to the related descriptions of step 301 in the embodiment shown in FIG. 3. After the CU sends the first positioning information request to the DU, if a UE context modification required received by the CU does not carry first information, the CU may determine that SRS configuration for a terminal device fails, and the CU may determine that positioning information (for example, an SRS of the terminal device) of the terminal device fails to be configured. For the first information, refer to the related descriptions in the embodiment shown in FIG. 3. Optionally, the CU may feed back a failure of positioning information configuration for the terminal device to a location management device.

It can be learned that the CU may determine, based on whether the UE context modification required carries the first information, whether the SRS of the terminal device is successfully configured, and the CU does not need to wait for a response to the first positioning information request from the DU. The DU may feed back the failure of the positioning information configuration for the terminal device to the location management device. In this way, the location management device requests to configure the SRS for the terminal device again, to ensure normal implementation of a positioning function, so that the terminal device is positioned.

Before the embodiment shown in FIG. 4 is described, it should be noted that the embodiments shown in FIG. 3 and FIG. 4 in this application are independent of each other. Technical features with a same name in different embodiments may have different meanings, and should be specifically understood with reference to a specific embodiment in which the technical feature is located.

FIG. 4 is a diagram of another embodiment of a communication method according to an embodiment of this application. Refer to FIG. 4. The communication method includes the following steps.

401: A DU sends a UE context modification required (UE context modification required) to a CU. The UE context modification required includes configuration information of an SRS of a terminal device. Correspondingly, the CU receives the UE context modification required from the DU.

Specifically, the DU may determine or update the configuration information of the SRS for the terminal device. Then, the DU may send the configuration information of the SRS to the CU via the UE context modification required, so that the CU sends the configuration information of the SRS to the terminal device. In other words, the DU requests, via the UE context modification required, the CU to modify a UE context for the terminal device, where the UE context includes the configuration information of the SRS, so as to provide the configuration information of the SRS for the terminal device.

Optionally, the UE context modification required includes a cell group configuration (CellGroupConfig) information element, and the configuration information of the SRS in the UE context modification required is carried in the cell group configuration information element. The CU may transmit information in the cell group configuration information element to the terminal device.

It should be noted that, optionally, the UE context modification required may be used to modify a UE context. There are a plurality of specific implementations. The following uses several possible implementations as examples. This application is also applicable to another manner. This is not specifically limited in this application.
1. The UE context modification required may be carried in a message, and the message may be used to modify the UE context. For example, the message is a UE context modification required message.
2. The UE context modification required includes an information element in the message, and the information element may be used to modify the UE context.
3. A type, a format, or a name of the message in which the UE context modification required is carried may be used to modify the UE context.

Optionally, the embodiment shown in FIG. 4 further includes step 401a to step 401d.

401a: A location management device sends a second positioning information request (positioning information request) to the CU. Correspondingly, the CU receives the second positioning information request from the location management device.

The second positioning information request is used to request positioning information of the terminal device. The positioning information of the terminal device includes the configuration information of the SRS. The location management device may be an LMF device.

It should be noted that, optionally, there are a plurality of manners in which the second positioning information request is used to request the positioning information of the terminal device. The following describes several possible examples. This application is also applicable to another manner. This is not specifically limited in this application.
1. The second positioning information request may be carried in a message, and the message is used to request the positioning information of the terminal device. For example, the second positioning information request is carried in a second positioning information request message.
2. The second positioning information request includes an information element in the message, and the information element is used to request the positioning information of the terminal device.
3. A type, a format, or a name of the message in which the second positioning information request is carried is used to request the positioning information of the terminal device.

401b: The CU sends a first positioning information request to the DU. Correspondingly, the DU receives the first positioning information request from the CU.

The first positioning information request is used to request to configure the terminal device to send the SRS and request the configuration information of the SRS.

It should be noted that, optionally, there are a plurality of manners in which the first positioning information request is used to indicate and request to configure the terminal device to send the SRS and request the configuration information of the SRS. The following describes several possible examples. This application is also applicable to another manner. This is not specifically limited in this application.
1. The first positioning information request may be carried in a message, and the message may be used to request to configure the terminal device to send the SRS and request the configuration information of the SRS. For example, the first positioning information request is carried in a first positioning information request message.
2. The first positioning information request includes an information element in the message, and the information element may be used to request to configure the terminal device to send the SRS and request the configuration information of the SRS.
3. A type, a format, or a name of the message in which the first positioning information request is carried may be used to request to configure the terminal device to send the SRS and request the configuration information of the SRS. This is not specifically limited in this application.

401c: The DU sends a first positioning information response to the CU. Correspondingly, the CU receives the first positioning information response from the DU.

Based on the process of step 401b, the DU may determine or update the configuration information of the SRS for the terminal device. However the UE context modification required in step 401 is associated with the first positioning information request. In other words, in step 401, UE context modification is initiated to the terminal device via the UE context modification required, to configure or update the configuration information of the SRS that is fed back to the CU in step 401c. In this way, the configuration information of the SRS is configured or updated for the terminal device. The first positioning information response includes the configuration information of the SRS. In this way, the DU feeds back the configuration information of the SRS to the CU, so that the CU sends the configuration information of the SRS to the location management device. Therefore, the location management device positions the terminal device.

It should be noted that, optionally, the first positioning information response may be used to indicate that the SRS configuration for the terminal device succeeds. There are a plurality of specific indication manners. The following describes several possible manners. This application is also applicable to another manner. This is not specifically limited in this application.
1. The first positioning information response may be carried in a message, and the message includes the configuration information of the SRS. The message may be used to indicate that the SRS configuration for the terminal device succeeds. The first positioning information response is carried in a first positioning information response message.
2. The first positioning information response includes an information element in the message, the configuration information of the SRS is carried in the information element, and the information element may be used to indicate that the SRS configuration for the terminal device succeeds.
3. A type, a format, or a name of the message in which the first positioning information response message is carried may be used to indicate that the SRS configuration for the terminal device succeeds.

401d: The CU sends a second positioning information response to the location management device. Correspondingly, the location management device receives the second positioning information response from the CU.

The second positioning information response includes the configuration information of the SRS, so that the CU sends the configuration information of the SRS to the location management device. Therefore, the location management device positions the terminal device.

It should be noted that, optionally, the second positioning information response may be used to indicate that the SRS configuration for the terminal device succeeds. There are a plurality of specific indication manners. The following describes several possible manners. This application is also applicable to another manner. This is not specifically limited in this application.
1. The second positioning information response may be carried in a message, and the message may be used to indicate that the SRS configuration for the terminal device succeeds. For example, the second positioning information response is carried in a second positioning information response message.
2. The second positioning information response includes an information element in the message, and the information element may be used to indicate that the SRS configuration for the terminal device succeeds.
3. A type, a format, or a name of the message in which the second positioning information response message is carried may be used to indicate that the SRS configuration for the terminal device succeeds.

Optionally, the embodiment shown in FIG. 4 further includes step 401e. Step 401e may be performed after step 401.

401e: The CU sends the configuration information of the SRS to the terminal device. Correspondingly, the terminal device receives the configuration information of the SRS from the CU.

In a possible implementation, the CU sends an RRC reconfiguration message to the terminal device, where the RRC reconfiguration message includes the configuration information of the SRS. Optionally, the configuration information of the SRS is carried in the cell group configuration information element.

Specifically, if the cell group configuration information element is included in the UE context modification required, the configuration information of the SRS is carried in the cell group configuration information element. The CU may transmit information in the cell group configuration information element to the terminal device.

For example, the CU may send information in the cell group configuration information element to the terminal device via the RRC reconfiguration message. For example, the CU may transparently transmit the information in the cell group configuration information element to the terminal device.

The following describes two possible cases in which the CU processes the UE context modification required.

Case 1: If the CU fails to process the UE context modification required, step 402 and step 403 are performed. Optionally, that the CU fails to process the UE context modification required includes that the CU fails to receive the UE context modification required, or that the CU fails to send the configuration information of the SRS to the terminal device, or may include another reason. This is not specifically limited in this application.

Case 2: If the CU successfully processes the UE context modification required, step 405 is performed.

402: The CU sends a UE context modification refuse (UE context modification refuse) to the DU. Correspondingly, the DU receives the UE context modification refuse from the CU.

If the CU fails to process the UE context modification required, the CU sends the UE context modification refuse to the DU. For example, if the CU fails to send the configuration information of the SRS to the terminal device, or the terminal device fails to receive the configuration information of the SRS, and feeds back a failure indication to the CU, the CU sends the UE context modification refuse to the DU, to indicate that the SRS configuration for the terminal device fails.

It should be noted that, optionally, when the CU cannot send the configuration information of the SRS to the terminal device because the CU cannot schedule the terminal device, the CU may also send the UE context modification refuse to the DU, to indicate that the SRS configuration for the terminal device fails.

It should be noted that, optionally, the UE context modification refuse may be used to indicate that the SRS configuration for the terminal device fails. There are a plurality of specific indication manners. The following describes several possible manners. This application is also applicable to another manner. This is not specifically limited in this application.
1. The UE context modification refuse may be carried in a message, and the message may be used to indicate that the SRS configuration for the terminal device fails. For example, the UE context modification refuse is carried in a UE context modification refuse message.
2. The UE context modification refuse includes an information element in the message, and the information element may be used to indicate that the SRS configuration for the terminal device fails.
3. A type, a format, or a name of the message in which the UE context modification refuse is carried may be used to indicate that the SRS configuration for the terminal device fails. This is not specifically limited in this application.

403: The DU sends first information or a first message to the CU. Correspondingly, the CU receives the first information or the first message from the DU.

The first information or the first message is used to indicate that the SRS configuration for the terminal device fails.

Optionally, the first information may be carried in a message. For example, the first information is carried in a positioning information update (positioning information update) message, or carried in a protocol message between the CU and the DU, or carried in another newly defined message. This is not specifically limited in this application.

In a possible implementation, the first information includes an information element in the message, and the information element is used to indicate that the SRS configuration for the terminal device fails. For example, the information element is an SRS configuration failure information element.

In another possible implementation, the first information includes indication information, and the indication information indicates that the SRS configuration for the terminal device fails. For example, when a value of the indication information is "0", it indicates that the SRS configuration for the terminal device fails.

Optionally, the DU explicitly or implicitly indicates, via the first message, that the SRS configuration for the terminal device fails.

For example, the DU explicitly indicates, via information included in the first message (for example, an information element in the first message), that the SRS configuration for the terminal device fails.

For example, the DU implicitly indicates, via a name, a format, or a type of the first message, that the SRS configuration for the terminal device fails.

For example, the first message includes a positioning information failure (positioning information failure) message, a positioning information failure indication message, an SRS configuration failure message, or another protocol message between the CU and the DU.

The UE context modification required in step 401 is associated with the first positioning information request in step 401b. In other words, in step 401, UE context modification is initiated to the terminal device via the UE context modification required, to configure or update the configuration information of the SRS that is fed back to the CU in step 401c. In this way, the configuration information of the SRS is configured or updated for the terminal device. If the CU fails to process the UE context modification required, the CU sends the UE context modification refuse to the DU. Therefore, the DU may determine that the SRS configuration for the terminal device fails, and the terminal device cannot obtain the configuration information of the SRS. In step 403, the DU indicates, to the CU via the first information or the first message, that the SRS configuration for the terminal device fails. Therefore, the CU learns that the SRS configuration for the terminal device fails, and sends corresponding information to the location management device, to indicate that the SRS configuration for the terminal device fails. The location management device may re-initiate a process of configuring the SRS for the terminal device, to ensure smooth implementation of a positioning function, so that the location management device positions the terminal device.

Based on step 402 and step 403, optionally, the embodiment shown in FIG. 4 further includes step 404. Step 404 may be performed after step 403.

404: The CU sends second information or a second message to the location management device. Correspondingly, the location management device receives the second information or the second message from the CU.

The second information or the second message is used to indicate that the SRS configuration for the terminal device fails.

Optionally, the second information may be carried in a message. For example, the second information is carried in a positioning information update message, or carried in a protocol message between the CU and the location management device, or carried in another newly defined message. This is not specifically limited in this application.

For example, the CU may send the second information to the location management device via a new radio positioning protocol A (new radio positioning protocol A, NRPPa) message, to indicate that the SRS configuration for the terminal device fails. This avoids a waste of measurement resources and a failure to implement a corresponding positioning function because the location management device requests a base station to measure the SRS of the terminal device when the location management device considers that SRS configuration for the terminal device succeeds.

In a possible implementation, the second information includes an information element in the message, and the information element is used to indicate that the SRS configuration for the terminal device fails. For example, the information element is an SRS configuration failure information element.

In another possible implementation, the second information includes indication information, and the indication information indicates that the SRS configuration for the terminal device fails. For example, when a value of the indication information is "0", it indicates that the SRS configuration for the terminal device fails.

Optionally, the CU explicitly or implicitly indicates, via the second message, that the SRS configuration for the terminal device fails.

For example, the CU explicitly indicates, via information included in the second message (for example, an information element in the second message), that the SRS configuration for the terminal device fails.

For example, the CU implicitly indicates, via a name, a format, or a type of the second message, or a message format, that the SRS configuration for the terminal device fails.

For example, the second message includes a positioning information failure message, a positioning information failure indication message, an SRS configuration failure message, or another protocol message between the CU and the location management device.

It should be noted that an indication function of the first information in step 403 is the same as that of the second information in step 404, but representation forms (for example, signaling formats) may be the same or different. This is not specifically limited in this application. An indication function of the first message in step 403 is the same as that of the second message in step 404, but representation forms (for example, message formats) may be the same or different. This is not specifically limited in this application.

405: The CU sends a UE context modification confirm (UE context modification confirm) to the DU. Correspondingly, the DU receives the UE context modification confirm from the CU.

If the CU successfully sends the configuration information of the SRS to the terminal device, the CU sends the UE context modification confirm to the DU, to indicate that SRS configuration for the terminal device succeeds.

It should be noted that, optionally, the UE context modification confirm may be used to indicate that the SRS configuration for the terminal device succeeds. There are a plurality of specific indication manners. The following describes several possible manners. This application is also applicable to another manner. This is not specifically limited in this application.
1. The UE context modification confirm may be carried in a message, and the message may be used to indicate that the SRS configuration for the terminal device succeeds. For example, the UE context modification confirm is carried in a UE context modification confirm message.
2. The UE context modification confirm includes an information element in the message, and the information element may be used to indicate that the SRS configuration for the terminal device succeeds.
3. A type, a format, or a name of the message in which the UE context modification confirm is carried may be used to indicate that the SRS configuration for the terminal device succeeds.

Optionally, based on step 405, the embodiment shown in FIG. 4 further includes step 406 and step 407. Step 406 and step 407 may be performed after step 405.

406: The DU sends third information or a third message to the CU. Correspondingly, the CU receives the third information or the third message from the DU.

The third information or the third message is used to indicate that the SRS configuration for the terminal device succeeds.

Optionally, the third information may be carried in a message. For example, the third information may be carried in a positioning information update message, or carried in another protocol message between the CU and the DU, or carried in another newly defined message. This is not specifically limited in this application.

In a possible implementation, the third information includes an information element in the message, and the information element is used to indicate that the SRS configuration for the terminal device succeeds. For example, the information element is an SRS configuration success information element.

In another possible implementation, the third information includes indication information, and the indication information indicates that the SRS configuration for the terminal device succeeds. For example, when a value of the indication information is "1", it indicates that the SRS configuration for the terminal device succeeds.

Optionally, the CU explicitly or implicitly indicates, via the third message, that the SRS configuration for the terminal device succeeds.

For example, the CU explicitly indicates, via information included in the third message, that the SRS configuration for the terminal device succeeds.

For example, the CU implicitly indicates, via a name, a type, or a format of the third message, that the SRS configuration for the terminal device succeeds.

For example, the third message includes a positioning information confirm (positioning information confirm) message, a positioning information success indication message, an SRS configuration success message, or another protocol message between the CU and the DU.

The UE context modification required in step 401 is associated with the first positioning information request in step 401b. In other words, in step 401, UE context modification is initiated to the terminal device via the UE context modification required, to configure or update the configuration information of the SRS that is fed back to the CU in step 401c. In this way, the configuration information of the SRS is configured or updated for the terminal device. If the CU successfully processes the UE context modification required, the CU sends the UE context modification confirm to the DU. Therefore, the DU may determine that the SRS configuration for the terminal device succeeds, and the terminal device can obtain the configuration information of the SRS. In step 406, the DU indicates, to the DU via the third information or the third message, that the SRS configuration for the terminal device succeeds. Therefore, the CU learns that the configuration for the terminal device succeeds, and sends corresponding information to the location management device, to indicate that the SRS configuration for the terminal device succeeds. In this case, the location management device may request the base station to measure the SRS of the terminal device, so that the location management device positions the terminal device.

407: The CU sends fourth information or a fourth message to the location management device. Correspondingly, the location management device receives the fourth information or the fourth message from the CU.

The fourth information or the fourth message is used to indicate that the SRS configuration for the terminal device succeeds.

Optionally, the fourth information may be carried in a message. For example, the fourth information may be carried in a positioning information update message, or carried in a protocol message between the CU and the location management device, or carried in another newly defined message. This is not specifically limited in this application.

In a possible implementation, the fourth information includes an information element in the message, and the information element is used to indicate that the SRS configuration for the terminal device succeeds. For example, the information element is an SRS configuration success information element.

In another possible implementation, the fourth information includes indication information, and the indication information indicates that the SRS configuration for the terminal device succeeds. For example, the CU may send the indication information to the location management device via the NRPPa message. When a value of the indication information is "1", it indicates that the SRS configuration for the terminal device succeeds.

Optionally, the CU explicitly or implicitly indicates, via the fourth message, that the SRS configuration for the terminal device succeeds.

For example, the CU explicitly indicates, via information included in the fourth message, that the SRS configuration for the terminal device succeeds.

For example, the CU implicitly indicates, via a message name, a type, or a format of the fourth message, that the SRS configuration for the terminal device succeeds.

For example, the fourth message includes a positioning information success message, a positioning information success indication message, an SRS configuration success message, or another protocol message between the CU and the location management device.

It should be noted that an indication function of the third information in step 406 is the same as that of the fourth information in step 407, but representation forms (for example, signaling formats) may be the same or different. This is not specifically limited in this application. An indication function of the third message in step 406 is the same as that of the fourth message in step 407, but representation forms (for example, message formats) may be the same or different. This is not specifically limited in this application.

In this embodiment of this application, the CU receives the UE context modification required from the DU, where the UE context modification required includes the configuration information of the SRS configured by the DU for the terminal device. The CU sends the UE context modification refuse to the DU. The CU receives the first information or the first message from the DU, where the first information or the first message is used to indicate that the SRS configuration for the terminal device fails, so that the CU learns that the SRS configuration for the terminal device fails. The CU may send corresponding information to the location management device, to indicate that the SRS configuration for the terminal device fails. The location management device may re-initiate a process of configuring the SRS for the terminal device, to ensure smooth implementation of a positioning function, so that the location management device positions the terminal device. Therefore, this avoids a positioning failure caused by a failure to configure the configuration information of the SRS for the terminal device. In addition, this avoids a waste of measurement resources because the location management device requests a base station to measure the SRS of the terminal device when the location management device considers that SRS configuration for the terminal device succeeds.

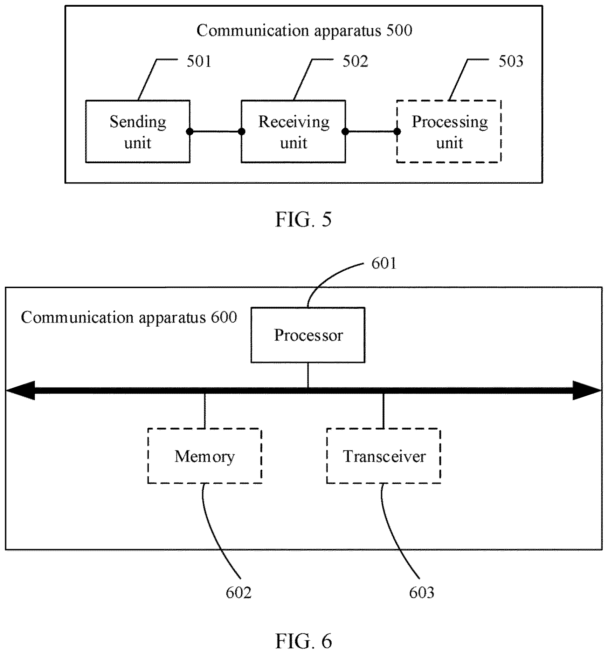

A communication apparatus provided in this application is described below. FIG. 5 is a diagram of a structure of a communication apparatus 500 according to an embodiment of this application. The communication apparatus 500 includes a sending unit 501 and a receiving unit 502. Optionally, the communication apparatus 500 further includes a processing unit 503.

When the communication apparatus 500 includes a DU or a chip in the DU, the communication apparatus 500 may be configured to perform all or some of the steps performed by the DU in the embodiments shown in FIG. 3 and FIG. 4. For details, refer to the related descriptions in the method embodiments shown in FIG. 3 and FIG. 4.

For example, the receiving unit 502 is configured to perform step 301 and step 304 in the embodiment shown in FIG. 3. The sending unit 501 is configured to perform step 302 and step 305 in the embodiment shown in FIG. 3.

For example, the receiving unit 502 is configured to perform step 301 and step 307 in the embodiment shown in FIG. 3. The sending unit 501 is configured to perform step 302 and step 308 in the embodiment shown in FIG. 3.

For example, the sending unit 501 is configured to perform step 401 and step 403 in the embodiment shown in FIG. 4. The receiving unit 502 is configured to perform step 402 in the embodiment shown in FIG. 4. Optionally, the receiving unit 502 is further configured to perform step 401b in the embodiment shown in FIG. 4, and the sending unit 501 is further configured to perform step 401c in the embodiment shown in FIG. 4.

For example, the sending unit 501 is configured to perform step 401 in the embodiment shown in FIG. 4. The receiving unit 501 is configured to perform step 405 in the embodiment shown in FIG. 4. Optionally, the receiving unit 502 is further configured to perform step 401b in the embodiment shown in FIG. 4, and the sending unit 501 is further configured to perform step 401c and step 406 in the embodiment shown in FIG. 4.

When the communication apparatus 500 includes a CU or a chip in the CU, the communication apparatus 500 may be configured to perform all or some of the steps performed by the CU in the embodiments shown in FIG. 3 and FIG. 4. For details, refer to the related descriptions in the method embodiments shown in FIG. 3 and FIG. 4.

For example, the sending unit 501 is configured to perform step 301, step 303, and step 304 in the embodiment shown in FIG. 3. The receiving unit 502 is configured to perform step 302 and step 305 in the embodiment shown in FIG. 3. Optionally, the receiving unit 502 is further configured to perform step 301a in the embodiment shown in FIG. 3. The sending unit 501 is further configured to perform step 306 in the embodiment shown in FIG. 3.

For example, the sending unit 501 is configured to perform step 301 and step 307 in the embodiment shown in FIG. 3. The receiving unit 502 is configured to perform step 302 and step 308 in the embodiment shown in FIG. 3. Optionally, the receiving unit 502 is further configured to perform step 301a in the embodiment shown in FIG. 3. The sending unit 501 is further configured to perform step 303 and step 309 in the embodiment shown in FIG. 3.

For example, the receiving unit 502 is configured to perform step 401 and step 403 in the embodiment shown in FIG. 4, and the sending unit 501 is configured to perform step 402 in the embodiment shown in FIG. 4. Optionally, the sending unit 501 is configured to perform step 401b, step 401d, step 401e, and step 404 in the embodiment shown in FIG. 4, and the receiving unit 502 is configured to perform step 401a and step 401c in the embodiment shown in FIG. 4.

For example, the receiving unit 502 is configured to perform step 401 in the embodiment shown in FIG. 4, and the sending unit 501 is configured to perform step 405 in the embodiment shown in FIG. 4. Optionally, the sending unit 501 is configured to perform step 401b, step 401d, step 401e, and step 407 in the embodiment shown in FIG. 4, and the receiving unit 502 is configured to perform step 401a, step 401c, and step 406 in the embodiment shown in FIG. 4.

This application further provides a communication apparatus. FIG. 6 is a diagram of another structure of a communication apparatus 600 according to an embodiment of this application.

The communication apparatus 600 includes a processor 601. Optionally, the communication apparatus 600 further includes a memory 602 and a transceiver 603.

The processor 601, the memory 602, and the transceiver 603 are separately connected through a bus, and the memory stores computer instructions.

When the communication apparatus 600 includes a DU or a chip in the DU, the communication apparatus 600 may be configured to perform the steps performed by the DU in the embodiments shown in FIG. 3 and FIG. 4. For details, refer to the related descriptions in the foregoing method embodiments.

When the communication apparatus 600 includes a CU or a chip in the CU, the communication apparatus 600 may be configured to perform the steps performed by the CU in the embodiments shown in FIG. 3 and FIG. 4. For details, refer to the related descriptions in the foregoing method embodiments.

The sending unit 501 and the receiving unit 502 shown in FIG. 5 may be specifically the transceiver 603. Therefore, specific implementation of the transceiver 603 is not described again. The processing unit 503 shown in FIG. 5 may be specifically the processor 601. Therefore, specific implementation of the processor 601 is not described again.

An embodiment of this application further provides a communication system. The communication system includes a DU and a CU. The DU is configured to perform all or some of the steps performed by the DU in the embodiments shown in FIG. 3 and FIG. 4. The CU is configured to perform all or some of the steps performed by the CU in the embodiments shown in FIG. 3 and FIG. 4.

An embodiment of this application further provides a computer program product including computer instructions. When the computer program product runs on a computer, the computer is enabled to perform the communication methods in the embodiments shown in FIG. 3 and FIG. 4.

An embodiment of this application further provides a computer-readable storage medium, including computer instructions. When the computer instructions are run on a computer, the computer is enabled to perform the communication methods in the embodiments shown in FIG. 3 and FIG. 4.

An embodiment of this application further provides a chip apparatus, including a processor, configured to invoke a computer program or computer instructions stored in a memory, to enable the processor to perform the communication methods in the embodiments shown in FIG. 3 and FIG. 4.

Optionally, the processor is coupled to the memory through an interface.

Optionally, the chip apparatus further includes the memory, and the memory stores a computer program or computer instructions.

The processor mentioned in any of the foregoing descriptions may be a general central processing unit, a microprocessor, an application-specific integrated circuit (application-specific integrated circuit, ASIC), or one or more of integrated circuits configured to control program execution of the communication methods in the embodiments shown in FIG. 3 and FIG. 4. The memory mentioned in any one of the foregoing may be a read-only memory (read-only memory, ROM), another type of static storage device that can store static information and instructions, a random access memory (random access memory, RAM), or the like.

In addition, it should be noted that the apparatus embodiments described above are merely examples. The units described as separate parts may or may not be physically separate, and parts displayed as units may or may not be physical units, in other words, may be located in one place, or may be distributed on a plurality of network units. Some or all of the modules may be selected based on actual requirements to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, like a floppy disk, a USB flash drive, a removable hard disk, a ROM, a RAM, a magnetic disk, or an optical disc of a computer, and includes several instructions for instructing a computer device to perform the methods in embodiments of this application.

All or some of the foregoing embodiments may be implemented by using software, hardware, firmware, or any combination thereof. When software is used to implement embodiments, all or some of embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, network device, local computing device, computing device, or data center to another website, computer, network device, local computing device, computing device, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, like a network device, a local computing device, or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid State Disk, SSD)), or the like.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps can be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiment. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one place, or may be distributed on a plurality of network units. Some or all of the units may be selected based on actual requirements to achieve the objectives of the solutions in embodiments.

In addition, function units in embodiments of this application may be integrated into one processing unit, or each of the units may exist alone physically, or two or more units are integrated into one unit. The integrated unit may be implemented in a form of hardware, or may be implemented in a form of a software function unit.

When the integrated unit is implemented in a form of a software function unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application.

In conclusion, the foregoing descriptions are merely example embodiments of the technical solutions of this application, but are not intended to limit the protection scope of this application. Any modification, equivalent replacement, or improvement made without departing from the spirit and principle of this application shall fall within the protection scope of this application.

## Claims

1. A communication method, wherein the method comprises:
receiving, by a distributed unit DU, a positioning information request from a central unit CU, wherein the positioning information request is used to request to configure a terminal device to send a sounding reference signal SRS and request configuration information of the SRS;
sending, by the DU, a user equipment UE context modification required to the CU, wherein the UE context modification required comprises first information, and the first information is used to indicate that the UE context modification required is in response to the positioning information request;
receiving, by the DU, a UE context modification confirm from the CU; and
sending, by the DU, a positioning information response to the CU, wherein the positioning information response comprises the configuration information of the SRS.

2. The method according to claim 1, wherein the UE context modification required comprises a cell group configuration information element, and the cell group configuration information element comprises the configuration information of the SRS.

3. A communication method, wherein the method comprises:
sending, by a central unit CU, a positioning information request to a distributed unit DU, wherein the positioning information request is used to request to configure a terminal device to send a sounding reference signal SRS and request configuration information of the SRS;
receiving, by the CU, a user equipment UE context modification required from the DU, wherein the UE context modification required comprises first information, and the first information is used to indicate that the UE context modification required is in response to the positioning information request;
sending, by the CU, a UE context modification confirm to the DU; and
receiving, by the CU, a positioning information response from the DU, wherein the positioning information response comprises the configuration information of the SRS.

4. The method according to any one of claims 1 to 3, wherein the first information comprises a CU trigger, a CU requirement, a CU association, a positioning trigger, a positioning information trigger, a positioning information request trigger, or a CU positioning information request.

5. The method according to claim 3 or 4, wherein the UE context modification required comprises a cell group configuration information element, and the cell group configuration information element comprises the configuration information of the SRS; and
the method further comprises:
sending, by the CU, the configuration information of the SRS to the terminal device.

6. A communication apparatus, wherein the communication apparatus comprises:
a receiving unit, configured to receive a positioning information request from a central unit CU, wherein the positioning information request is used to request to configure a terminal device to send a sounding reference signal SRS and request configuration information of the SRS; and
a sending unit, configured to send a user equipment UE context modification required to the CU, wherein the UE context modification required comprises first information, and the first information is used to indicate that the UE context modification required is in response to the positioning information request, wherein
the receiving unit is further configured to receive a UE context modification confirm from the CU; and
the sending unit is further configured to send a positioning information response to the CU, wherein the positioning information response comprises the configuration information of the SRS.

7. The communication apparatus according to claim 6, wherein the UE context modification required comprises a cell group configuration information element, and the cell group configuration information element comprises the configuration information of the SRS.

8. A communication apparatus, wherein the communication apparatus comprises:
a sending unit, configured to send a positioning information request to a distributed unit DU, wherein the positioning information request is used to request to configure a terminal device to send a sounding reference signal SRS and request configuration information of the SRS; and
a receiving unit, configured to receive a user equipment UE context modification required from the DU, wherein the UE context modification required comprises first information, and the first information is used to indicate that the UE context modification required is in response to the positioning information request, wherein
the sending unit is further configured to send a UE context modification confirm to the DU; and
the receiving unit is further configured to receive a positioning information response from the DU, wherein the positioning information response comprises the configuration information of the SRS.

9. The communication apparatus according to any one of claims 6 to 8, wherein the first information comprises a CU trigger, a CU requirement, a CU association, a positioning trigger, a positioning information trigger, a positioning information request trigger, or a CU positioning information request.

10. The communication apparatus according to claim 8 or 9, wherein the UE context modification required comprises a cell group configuration information element, and the cell group configuration information element comprises the configuration information of the SRS; and
the sending unit is further configured to:
send the configuration information of the SRS to the terminal device.
